# EUROPEAN PATENT APPLICATION

(11) **EP 4 797 582 A1**
(43) Date of publication of application: **26.08.2026**
(21) Application number: 24887801.9
(22) Date of filing: 28.10.2024
(51) Int. Cl.: H04L 1/00

(54) **COMMUNICATION METHOD AND APPARATUS**

(30) Priority: 09.11.2023 CN 202311503412
(71) Applicant: HUAWEI TECHNOLOGIES CO., LTD., Shenzhen 518129 (CN)
(72) Inventor: WEN, Shan, Shenzhen, Guangdong 518129 (CN); HUANG, Huang, Shenzhen, Guangdong 518129 (CN)
(74) Representative: Thun, Clemens
(86) International application number: PCT/CN2024/127871
(87) International publication number: WO 2025/098188

(57) **Abstract**

This application provides a communication method and apparatus, relating to the field of communication technologies. This application can improve situations with insufficient CP or no CP, and help improve demodulation performance of symbols. The method includes: A first communication device generates a symbol in a first time unit, where a first symbol is a 1^{st} symbol in the first time unit, and the first symbol includes a first sequence and a second sequence; in correspondence with that the first symbol does not include a cyclic prefix CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol; and the first communication device sends the symbol in the first time unit.

## Description

This application claims priority to Chinese Patent Application No. 202311503412.2, filed with the China National Intellectual Property Administration on November 9, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In communication systems, a cyclic prefix (cyclic prefix, CP) is added to the beginning of each symbol, to reduce inter-symbol interference (inter-symbol interference, ISI) and inter-carrier interference (inter-carrier interference, ICI).

However, in some embodiments, a symbol may include a unique word (unique word, UW) rather than a CP, where the UW forms an equivalent CP. For example, a time unit includes a plurality of symbols, and each symbol includes a UW at a tail. In this way, a UW at a tail of a previous symbol serves as an equivalent CP of a current symbol, but a 1^{st} symbol in the time unit suffers from no CP, affecting demodulation performance.

### SUMMARY

To resolve the foregoing technical problem, this application provides a communication method and apparatus, to improve situations with insufficient CP or no CP, and help improve demodulation performance of symbols. To achieve the foregoing objective, this application uses the following technical solutions.

According to a first aspect, a communication method is provided. The method may be performed by a first communication device. Unless otherwise specified, the "first communication device" in this application may be the first communication device (for example, a network device or a terminal device shown), may be a component (for example, a processor, a chip, or a chip system) in the first communication device, or may be a logic module or software that can implement all or some functions of the first communication device. The following uses an example in which the first communication device is the execution body for description. The method includes: The first communication device generates a symbol in a first time unit, where a first symbol is a 1^{st} symbol in the first time unit, and the first symbol includes a first sequence and a second sequence; in correspondence with that the first symbol does not include a cyclic prefix CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol; and the first communication device sends the symbol in the first time unit.

For example, the first time unit is one slot. The first communication device is a terminal device or a network device.

That the start position of the first sequence is adjacent to the end position of the CP of the first symbol may be understood as that a 1^{st} value of the first sequence is a next value of the CP of the first symbol. To be specific, the start position of the first sequence is a next position after the end position of the CP.

In this way, the first sequence is set at a head of the 1^{st} symbol (namely, the first symbol) in the first time unit. In correspondence with a case in which the first symbol does not include the CP, the first sequence may be considered as an equivalent CP of the first symbol. In correspondence with that the first symbol includes the CP, the CP of the first symbol and the first sequence may be considered as an equivalent CP of the first symbol. In other words, the first sequence exists, and therefore a length of the CP of the first symbol is extended. This helps better reduce inter-symbol interference ISI and inter-subcarrier interference ICI and improve demodulation performance.

According to a second aspect, a communication method is provided. The method may be performed by a second communication device. Unless otherwise specified, the "second communication device" in this application may be the second communication device (for example, a network device or a terminal device), may be a component (for example, a processor, a chip, or a chip system) in the second communication device, or may be a logic module or software that can implement all or some functions of the second communication device. The following uses an example in which the second communication device is the execution body for description. The method includes: The second communication device receives a symbol in a first time unit, where a first symbol is a 1^{st} symbol in the first time unit, and the first symbol includes a first sequence and a second sequence; in correspondence with that the first symbol does not include a cyclic prefix CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol.

For example, the first time unit is one slot. The second communication device is a terminal device or a network device.

For technical effect brought by the second aspect, refer to the technical effect brought by the first aspect. Details are not described herein again.

With reference to the first aspect and the second aspect, in a possible design, the first time unit further includes a second symbol, the second symbol is a symbol immediately following the first symbol, the second symbol includes a third sequence and a fourth sequence, a start position of the third sequence is a start position of the second symbol, an end position of the fourth sequence is an end position of the second symbol, the third sequence is the same as the first sequence, a signal with a length of x at a tail of the fourth sequence is the same as a signal with a length of x at a tail of the second sequence, and x is a positive integer.

In other words, the first sequence is the same as the third sequence, and therefore the first symbol may be a symbol with a high importance level. For example, the first symbol is a synchronization symbol, a reference symbol, or a control symbol. This helps reduce a data demodulation delay.

The signal with the length of x at the tail of the fourth sequence is the same as the signal with the length of x at the tail of the second sequence, and therefore the signal with the length of x at a tail of the first symbol may be used as an equivalent CP of the second symbol. Similarly, the signal with the length of x at a tail of the second symbol may be used as an equivalent CP of a next symbol of the second symbol.

With reference to the first aspect and the second aspect, in a possible design, the first sequence includes a first unique word UW and/or service data, and the service data includes at least a part of service data carried by the first symbol or at least a part of service data carried by the second symbol.

In this way, the first sequence and the CP of the first symbol form a larger CP. This helps reduce the ISI and ICI on the first symbol. When the first sequence includes the service data, data transmission efficiency is improved.

With reference to the first aspect and the second aspect, in a possible design, the first sequence is a second UW.

In this way, only the first sequence in the first symbol is affected by the ISI and the ICI, and therefore the first sequence is set as the second UW, to resist the ICI and the ISI.

With reference to the first aspect and the second aspect, in a possible design, the second sequence is a third UW.

With reference to the first aspect and the second aspect, in a possible design, the first symbol is a downlink symbol, and a length of the first sequence is determined based on a length of the CP of the first symbol and a maximum delay spread of the first symbol. This reduces impact of the ICI on the first symbol.

In correspondence with that the first symbol does not include the CP, the length of the CP of the first symbol is zero.

With reference to the first aspect and the second aspect, in a possible design, the first symbol is an uplink symbol, and a length of the first sequence is determined based on a length of the CP of the first symbol, a maximum delay spread of the first symbol, and a maximum delay spread of a third symbol, where the third symbol is a symbol immediately preceding the first symbol. This minimizes impact of the ICI and the ISI on the first symbol.

With reference to the first aspect and the second aspect, in a possible design, the length of the first sequence satisfies: ${x}_{h} + {N}_{1 st uw , μ} \leq {MDS}_{0}$

Herein, *xₕ* represents the length of the first sequence, *N*_{1st uw,*µ*} represents the length of the CP of the first symbol, and *MDS*₀ represents the maximum delay spread of the first symbol.

With reference to the first aspect and the second aspect, in a possible design, the length of the first sequence satisfies: ${x}_{h} + {N}_{1 s uw , μ} \leq max \left({MDS}_{0}, {MDS}_{pre}\right)$

Herein, *xₕ* represents the length of the first sequence, *N*_{1st uw,*µ*} represents the length of the CP of the first symbol, *MDS*₀ represents the maximum delay spread of the first symbol, *MDSₚᵣₑ* represents the maximum delay spread of the third symbol, and *max* ( ) represents a maximum value operator.

With reference to the first aspect and the second aspect, in a possible design, the length of the first sequence is further determined based on at least one of the following: a modulation and coding scheme MCS of the first symbol, an error vector magnitude EVM required for the first symbol, a symbol type of the first symbol, or a transmission payload of the transmitted symbol.

For example, when *xₕ + N*_{1*s uw,µ*} ≤ *MDS*₀*,* or when *xₕ + N*_{1*s uw,µ*} ≤ *max* (*MDS*₀ *, MDSₚᵣₑ*), other factors, for example, the MCS of the first symbol, the EVM required for the first symbol, the symbol type of the first symbol, or the transmission payload of the transmitted symbol, are further considered for the length of the first sequence. This satisfies a requirement of the first symbol as much as possible.

With reference to the first aspect and the second aspect, in a possible design, if the first communication device is the network device, the method further includes: sending first information, where the first information includes a configuration parameter of the first sequence. This helps a device on a receiving side demodulate the first symbol.

With reference to the first aspect and the second aspect, in a possible design, if the first communication device is the terminal device, the method further includes: receiving first information, where the first information includes a configuration parameter of the first sequence. Therefore, the first communication device generates, based on the configuration parameter, the first sequence that satisfies a configuration requirement.

With reference to the first aspect and the second aspect, in a possible design, when the first sequence includes the first UW and the service data, the configuration parameter of the first sequence includes a length parameter of the first UW. Therefore, the device on the receiving side learns of a start position of the service data in the first sequence. This improves data demodulation performance of the device on the receiving side.

With reference to the first aspect and the second aspect, in a possible design, the first information is carried in one of the following: downlink control information DCI, a media access control-control element MAC-CE, or a radio resource control RRC message.

With reference to the first aspect and the second aspect, in a possible design, the first information further includes position information of a fast Fourier transform FFT window, and the FFT window is used for demodulation of the first symbol.

For example, the position information of the FFT window indicates a start position, an end position, a size, and the like of the FFT window, so that the device on the receiving side demodulates the first symbol.

According to a third aspect, a communication method is provided. The method may be performed by a first communication device. Unless otherwise specified, the "first communication device" in this application may be the first communication device (for example, a network device or a terminal device shown), may be a component (for example, a processor, a chip, or a chip system) in the first communication device, or may be a logic module or software that can implement all or some functions of the first communication device. The following uses an example in which the first communication device is the execution body for description. The method includes: The first communication device generates a symbol in a first time unit, where a first symbol is a 1^{st} symbol in the first time unit, and the first symbol includes a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit includes a seventh sequence, and an end position of the seventh sequence is adjacent to the start position of the CP; and the fifth sequence is the same as the seventh sequence, and the sixth sequence is the same as the CP; and the first communication device sends the symbol in the first time unit.

That the end position of the fifth sequence is adjacent to the start position of the sixth sequence may be understood as that a 1^{st} value of the sixth sequence is a next value of the fifth sequence. To be specific, the start position of the sixth sequence is a next position after the end position of the fifth sequence.

That the end position of the seventh sequence is adjacent to the start position of the CP may be understood as that a 1^{st} value of the CP is a next value of the seventh sequence. To be specific, the start position of the CP is a next position after the end position of the seventh sequence.

In this way, for the 1^{st} symbol (namely, the first symbol) in the first time unit, a tail of the symbol includes two parts, namely, the fifth sequence and the sixth sequence. The fifth sequence is the same as the seventh sequence, and the sixth sequence is the same as the CP of the first symbol, and therefore the seventh sequence (namely, an end sequence of a previous symbol) and the CP of the first symbol may be considered as an equivalent CP of the first symbol. In other words, in correspondence with that the first symbol includes the CP, the seventh sequence can be equivalent to extending the CP. This helps better reduce impact of inter-symbol interference ISI and inter-subcarrier interference ICI and improve demodulation performance.

According to a fourth aspect, a communication method is provided. The method may be performed by a second communication device. Unless otherwise specified, the "second communication device" in this application may be the second communication device (for example, a network device or a terminal device), may be a component (for example, a processor, a chip, or a chip system) in the second communication device, or may be a logic module or software that can implement all or some functions of the second communication device. The following uses an example in which the second communication device is the execution body for description. The method includes: The second communication device receives a symbol in a first time unit, where a first symbol is a 1^{st} symbol in the first time unit, and the first symbol includes a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit includes a seventh sequence, and an end position of the seventh sequence is adjacent to the start position of the CP; and the fifth sequence is the same as the seventh sequence, and the sixth sequence is the same as the CP.

For technical effect brought by the fourth aspect, refer to the technical effect brought by the third aspect. Details are not described herein again.

With reference to the third aspect and the fourth aspect, in a possible design, the first time unit further includes a second symbol, the second symbol is a symbol immediately following the first symbol, the second symbol includes an eighth sequence, and an end position of the eighth sequence is an end position of the second symbol; a signal with a length of x at a tail of the eighth sequence is the same as a signal with a length of x at a tail of a ninth sequence, where x is a positive integer; and the ninth sequence includes the fifth sequence and the sixth sequence, and an end position of the ninth sequence is the end position of the sixth sequence.

In this way, the signal with the length of x at the tail of the eighth sequence is the same as the signal with the length of x at the tail of the ninth sequence, and therefore the signal with the length of x at a tail of the first symbol may be used as an equivalent CP of the second symbol. Similarly, the signal with the length of x at a tail of the second symbol may be used as an equivalent CP of a next symbol of the second symbol.

With reference to the third aspect and the fourth aspect, in a possible design, a precoding scheme of the first symbol is the same as a precoding scheme of the last symbol; or the first symbol and the last symbol are not precoded.

In this way, the fifth sequence at the tail of the first symbol is the same as the seventh sequence at the tail of the last symbol.

According to a fifth aspect, a communication method is provided. The method may be performed by a first communication device. Unless otherwise specified, the "first communication device" in this application may be the first communication device (for example, a network device or a terminal device shown), may be a component (for example, a processor, a chip, or a chip system) in the first communication device, or may be a logic module or software that can implement all or some functions of the first communication device. The following uses an example in which the first communication device is the execution body for description. The method includes: The first communication device generates a symbol in a first time unit, where a first symbol is a 1^{st} symbol in the first time unit, and the first symbol includes a cyclic prefix CP, a tenth sequence, an eleventh sequence, a twelfth sequence, and a thirteenth sequence; a start position of the CP is a start position of the first symbol, a start position of the tenth sequence is adjacent to an end position of the CP, an end position of the eleventh sequence is adjacent to a start position of the twelfth sequence, an end position of the twelfth sequence is adjacent to a start position of the thirteenth sequence, and an end position of the thirteenth sequence is an end position of the first symbol; and the CP is the same as the eleventh sequence, and the tenth sequence is the same as the twelfth sequence; and the first communication device sends the symbol in the first time unit.

That the start position of the tenth sequence is adjacent to the end position of the CP may be understood as that a 1^{st} value of the tenth sequence is a next value of the CP. To be specific, the start position of the tenth sequence is a next position after the end position of the CP.

That the end position of the eleventh sequence is adjacent to the start position of the twelfth sequence may be understood as that a 1^{st} value of the twelfth sequence is a next value of the eleventh sequence. To be specific, the start position of the twelfth sequence is a next position after the end position of the eleventh sequence.

That the end position of the twelfth sequence is adjacent to the start position of the thirteenth sequence may be understood as that a 1^{st} value of the thirteenth sequence is a next value of the twelfth sequence. To be specific, the start position of the thirteenth sequence is a next position after the end position of the twelfth sequence.

In this way, for the 1^{st} symbol (namely, the first symbol) in the first time unit, a head of the symbol includes two parts: the CP of the first symbol and the tenth sequence. The CP of the first symbol is the same as the eleventh sequence, and the tenth sequence is the same as the twelfth sequence, and therefore the CP of the first symbol and the tenth sequence may be considered as an equivalent CP of a middle segment signal in the first symbol. In correspondence with that the first symbol includes the CP, the tenth sequence can be equivalent to extending the CP. This helps better reduce impact of inter-symbol interference ISI and inter-subcarrier interference ICI and improve demodulation performance.

According to a sixth aspect, a communication method is provided. The method may be performed by a second communication device. Unless otherwise specified, the "second communication device" in this application may be the second communication device (for example, a network device or a terminal device), may be a component (for example, a processor, a chip, or a chip system) in the second communication device, or may be a logic module or software that can implement all or some functions of the second communication device. The following uses an example in which the second communication device is the execution body for description. The method includes: The second communication device receives a symbol in a first time unit, where a first symbol is a 1^{st} symbol in the first time unit, and the first symbol includes a cyclic prefix CP, a tenth sequence, an eleventh sequence, a twelfth sequence, and a thirteenth sequence; a start position of the CP is a start position of the first symbol, a start position of the tenth sequence is adjacent to an end position of the CP, an end position of the eleventh sequence is adjacent to a start position of the twelfth sequence, an end position of the twelfth sequence is adjacent to a start position of the thirteenth sequence, and an end position of the thirteenth sequence is an end position of the first symbol; and the CP is the same as the eleventh sequence, and the tenth sequence is the same as the twelfth sequence.

For technical effect brought by the sixth aspect, refer to the technical effect brought by the fifth aspect. Details are not described herein again.

With reference to the fifth aspect and the sixth aspect, in a possible design, the eleventh sequence includes first part service data, the twelfth sequence includes second part service data, and the thirteenth sequence is a unique word UW.

According to a seventh aspect, a communication method is provided. The method may be performed by a first communication device. Unless otherwise specified, the "first communication device" in this application may be the first communication device (for example, a network device or a terminal device shown), may be a component (for example, a processor, a chip, or a chip system) in the first communication device, or may be a logic module or software that can implement all or some functions of the first communication device. The following uses an example in which the first communication device is the execution body for description. The method includes: The first communication device generates a symbol in a first time unit, where a first symbol is a 1^{st} symbol in the first time unit, the first symbol includes a cyclic prefix CP, a fourteenth sequence, a fifteenth sequence, a sixteenth sequence, and a seventeenth sequence, a start position of the CP is a start position of the first symbol, a start position of the fourteenth sequence is adjacent to an end position of the CP, an end position of the fifteenth sequence is adjacent to a start position of the sixteenth sequence, and the end position of the fifteenth sequence is determined based on a length of the first symbol; an end position of the seventeenth sequence is an end position of the first symbol; and the CP is the same as the fifteenth sequence, and the fourteenth sequence is the same as the sixteenth sequence; and the first communication device sends the symbol in the first time unit.

That the start position of the fourteenth sequence is adjacent to the end position of the CP may be understood as that a 1^{st} value of the fourteenth sequence is a next value of the CP. To be specific, the start position of the fourteenth sequence is a next position after the end position of the CP.

That the end position of the fifteenth sequence is adjacent to the start position of the sixteenth sequence may be understood as that a 1^{st} value of the sixteenth sequence is a next value of the fifteenth sequence. To be specific, the start position of the sixteenth sequence is a next position after the end position of the fifteenth sequence.

In this way, for the 1^{st} symbol (namely, the first symbol) in the first time unit, a head of the symbol includes two parts: the CP of the first symbol and the fourteenth sequence. The CP of the first symbol is the same as the fifteenth sequence, and the fourteenth sequence is the same as the sixteenth sequence, and therefore the CP of the first symbol and the fourteenth sequence may be considered as an equivalent CP of a middle segment signal in the first symbol. In correspondence with that the first symbol includes the CP, the fourteenth sequence can be equivalent to extending the CP. This helps better reduce impact of inter-symbol interference ISI and inter-subcarrier interference ICI and improve demodulation performance.

According to an eighth aspect, a communication method is provided. The method may be performed by a second communication device. Unless otherwise specified, the "second communication device" in this application may be the second communication device (for example, a network device or a terminal device), may be a component (for example, a processor, a chip, or a chip system) in the second communication device, or may be a logic module or software that can implement all or some functions of the second communication device. The following uses an example in which the second communication device is the execution body for description. The method includes: The second communication device receives a symbol in a first time unit, where a first symbol is a 1^{st} symbol in the first time unit, the first symbol includes a cyclic prefix CP, a fourteenth sequence, a fifteenth sequence, a sixteenth sequence, and a seventeenth sequence, a start position of the CP is a start position of the first symbol, a start position of the fourteenth sequence is adjacent to an end position of the CP, an end position of the fifteenth sequence is adjacent to a start position of the sixteenth sequence, and the end position of the fifteenth sequence is determined based on a length of the first symbol; an end position of the seventeenth sequence is an end position of the first symbol; and the CP is the same as the fifteenth sequence, and the fourteenth sequence is the same as the sixteenth sequence.

For technical effect brought by the eighth aspect, refer to the technical effect brought by the seventh aspect. Details are not described herein again.

With reference to the seventh aspect and the eighth aspect, in a possible design, that the end position of the fifteenth sequence is determined based on the length of the first symbol includes: The first symbol includes N values, a first value in the N values is adjacent to the end position of the CP, and a last value in the N values is adjacent to a start position of the seventeenth sequence. The fifteenth sequence includes N/2 values in the N values.

With reference to the seventh aspect and the eighth aspect, in a possible design, the fourteenth sequence includes first part service data, the fifteenth sequence includes second part service data, and the seventeenth sequence is a unique word UW.

According to a ninth aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to a tenth aspect, a communication apparatus is provided, and includes a processor and a memory. The processor is coupled to the memory. The memory stores program instructions. When the program instructions stored in the memory are executed by the processor, the communication apparatus is enabled to perform the method according to any one of the foregoing aspects or any possible design of any one of the foregoing aspects.

According to an eleventh aspect, a communication apparatus is provided, and includes a processor. The processor is configured to execute a computer program or instructions, to enable the communication apparatus to perform the method according to any one of the foregoing aspects. Optionally, the communication apparatus further includes a memory. The memory may be coupled to the processor. Alternatively, the memory may be independent of the processor. For example, the memory and the processor are two independent modules. The memory may be outside the communication apparatus, or may be inside the communication apparatus.

According to a twelfth aspect, a computer-readable storage medium is provided. The computer-readable storage medium stores a computer program or instructions. When the computer program or instructions are run on a communication apparatus, the communication apparatus is enabled to perform the method in any one of the foregoing aspects.

According to a thirteenth aspect, a computer program product including instructions is provided. When the instructions are run on a communication apparatus, the communication apparatus is enabled to perform the method in any one of the foregoing aspects.

The communication apparatus provided in any one of the ninth aspect to the thirteenth aspect may be the first communication device in the first aspect, the third aspect, the fifth aspect, or the seventh aspect, or a component included in the first communication device, for example, a chip or a chip system; or the communication apparatus may be the second communication device in the second aspect, the fourth aspect, the sixth aspect, or the eighth aspect, or a component included in the second communication device, for example, a chip or a chip system. When the apparatus is a chip system, the apparatus may include a chip, or may include a chip and another discrete component.

It may be understood that when the communication apparatus provided in any one of the ninth aspect to the thirteenth aspect is a chip, a sending action/function of the communication apparatus may be understood as information output, and a receiving action/function of the communication apparatus may be understood as information input.

For technical effect brought by any design of the ninth aspect to the thirteenth aspect, refer to the technical effect brought by different designs of the first aspect to the eighth aspect. Details are not described herein again.

### BRIEF DESCRIPTION OF DRAWINGS

FIG. 1 is a diagram of an architecture of a communication system according to an embodiment of this application;
FIG. 2a is a diagram of a signal transmission principle according to an embodiment of this application;
FIG. 2b is a diagram of another signal transmission principle according to an embodiment of this application;
FIG. 3a is a diagram of a principle of a modulation scheme according to an embodiment of this application;
FIG. 3b is a diagram of a principle of another modulation scheme according to an embodiment of this application;
FIG. 3c is a diagram of a principle of another modulation scheme according to an embodiment of this application;
FIG. 3d is a diagram of a principle of another modulation scheme according to an embodiment of this application;
FIG. 4 is a diagram of a principle of inserting a cyclic prefix according to an embodiment of this application;
FIG. 5 is a diagram of positions of fast Fourier transform FFT windows on a receiving side according to an embodiment of this application;
FIG. 6 is a diagram of structures of unique word symbols according to an embodiment of this application;
FIG. 7 is a diagram of a principle of generating a unique word symbol according to an embodiment of this application;
FIG. 8 is a schematic flowchart of a communication method according to an embodiment of this application;
FIG. 9 is a diagram of structures of other unique word symbols according to an embodiment of this application;
FIG. 10 is a diagram of structures of other unique word symbols according to an embodiment of this application;
FIG. 11 is a diagram of structures of other unique word symbols according to an embodiment of this application;
FIG. 12 is a diagram of structures of other unique word symbols according to an embodiment of this application;
FIG. 13 is a diagram of a principle of an error vector magnitude EVM according to an embodiment of this application;
FIG. 14 is a diagram of structures of other unique word symbols according to an embodiment of this application;
FIG. 15 is a schematic flowchart of another communication method according to an embodiment of this application;
FIG. 16 is a diagram of structures of other unique word symbols according to an embodiment of this application;
FIG. 17 is a schematic flowchart of another communication method according to an embodiment of this application;
FIG. 18 is a diagram of a structure of another unique word symbol according to an embodiment of this application;
FIG. 19 is a schematic flowchart of another communication method according to an embodiment of this application;
FIG. 20 is a diagram of a structure of another unique word symbol according to an embodiment of this application;
FIG. 21 is a diagram of a structure of another unique word symbol according to an embodiment of this application;
FIG. 22 is a diagram of a structure of a communication apparatus according to an embodiment of this application;
FIG. 23 is a diagram of a structure of another communication apparatus according to an embodiment of this application; and
FIG. 24 is a diagram of a structure of another communication apparatus according to an embodiment of this application.

### DESCRIPTION OF EMBODIMENTS

The following describes technical solutions of this application with reference to accompanying drawings.

The terms "system" and "network" may be interchangeable in this application. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" mean giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences between the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

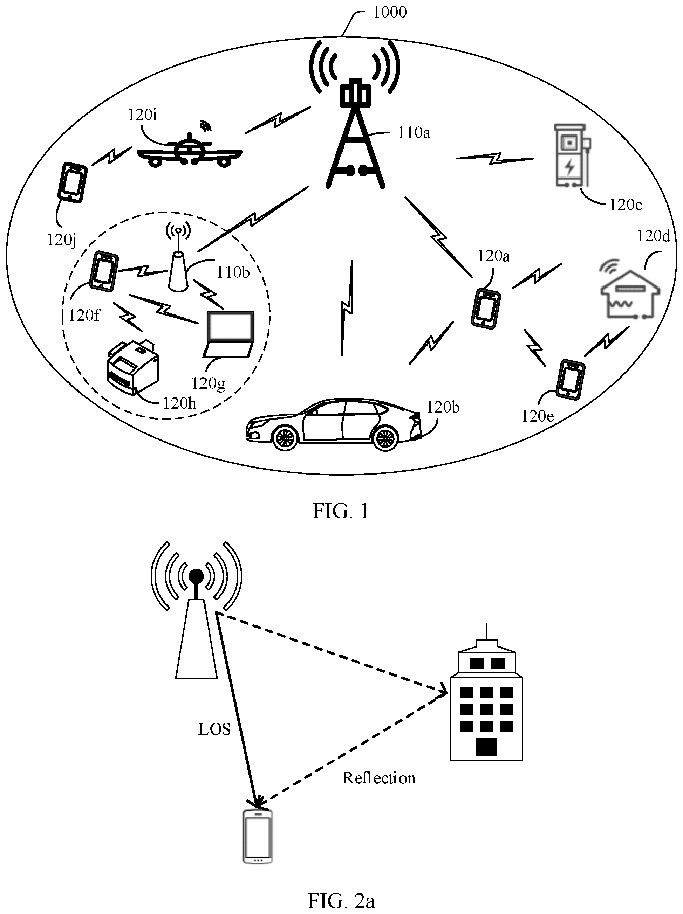

FIG. 1 is a diagram of an architecture of a communication system 1000 to which embodiments of this application are applied. As shown in FIG. 1, the communication system 1000 includes at least one network device (for example, 110a and 110b in FIG. 1) and at least one terminal device (for example, 120a to 120j in FIG. 1). A terminal device may communicate with a network device in a wireless manner. Optionally, different network devices may communicate with each other. Optionally, different terminal devices may communicate with each other.

It should be noted that FIG. 1 is merely a diagram. Although not shown, the communication system 1000 may further include another network device. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different physical devices independent of each other, functions of the core network device and logical functions of the network device may be integrated into a same physical device, or some functions of the core network device and some functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network with two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may alternatively be a module or a unit that completes some functions of a base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented via a software module, a hardware module, or a combination of a software module and a hardware module. A radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device includes a device that provides a voice and/or data connectivity for a user. Specifically, the terminal device includes a device that provides the voice for the user, includes a device that provides the data connectivity for the user, or includes a device that provides the voice and the data connectivity for the user, for example, may include a handheld device having a wireless connection function, or a processing device connected to a wireless modem. The terminal device may communicate with the core network via the radio access network, exchange a voice or data with the RAN, or exchange the voice and the data with the RAN. The terminal device may include user equipment (user equipment, UE), a wireless terminal device, a mobile terminal device, a D2D terminal device, a V2X terminal device, a machine-to-machine/machine-type communication (machine-to-machine/machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, handheld, or computer built-in mobile apparatus, or the like. For example, the terminal device may be a device, like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with the base station may be considered as the terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

It should be understood that the network device and the terminal device may be at fixed positions, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network via 120i, the terminal device 120i is a network device. However, for the network device 110a, 120i is a terminal device. In other words, 110a and 120i communicate with each other via a radio air interface protocol. Certainly, 110a and 120i may alternatively communicate with each other via an interface protocol between base stations. In this case, for 110a, 120i is also a network device. Therefore, the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

Communication may be performed between the network device and the terminal device, between the network devices, and between the terminal devices on a licensed spectrum, may be performed on an unlicensed spectrum, or may be performed on both a licensed spectrum and an unlicensed spectrum. Communication may be performed on a spectrum below 6 gigahertz (gigahertz, GHz), may be performed on a spectrum above 6 GHz, or may be performed on both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and a smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may alternatively be replaced with a name of a corresponding function in the another communication system.

For ease of understanding of embodiments of this application, terms in embodiments of this application are first briefly described below. It should be understood that these descriptions are merely for ease of understanding embodiments of this application, and should not constitute any limitation on this application.

### 1-1. Multipath (multipath)

Multipath is a propagation phenomenon where a signal reaches a receiver via two or more paths. FIG. 2a shows an example in which a signal reaches a receiver via two paths: a line-of-sight (line-of-sight, LOS) propagation path and a non-line-of-sight (non-line-of-sight, NLOS) propagation path. Causes of the multipath include atmospheric duct, ionospheric reflection and refraction, and reflection from water and land objects (such as mountains and buildings).

### 1-2. Delay spread (delay spread, DS)

A plurality of copies of a signal propagate different distances, and therefore the copies arrive at a receiver at different time. A difference between arrival time of a last distinguishable delayed signal and arrival time of a first delayed signal is referred to as a maximum delay spread (maximum delay spread, MDS).

If a signal is received at given time, and then a copy of the signal is received a fraction of a second later, information is "blurred" due to superposition of the signal in time. As the MDS increases, quality of the received signal deteriorates, and even communication cannot be performed (that is, the transmitted signal cannot be correctly demodulated) even when a signal level is higher than a sensitivity level of the receiver.

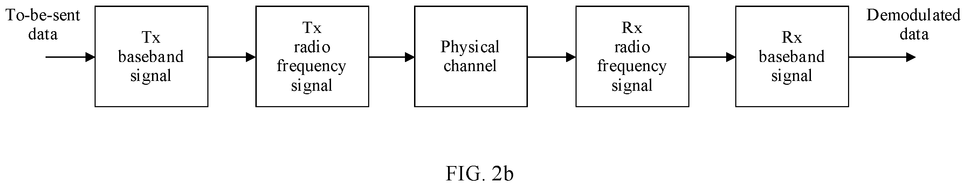

In addition, in a communication process, when a baseband pulse shaping (or filter) and a radio frequency filter are non-Nyquist (Nyquist) pulses, the baseband pulse shaping and the radio frequency filter also cause delay spreads on received signals. In this application, the baseband pulse shaping and the radio frequency filter are considered as a part of a physical channel. In other words, the physical channel is not only a physical channel in FIG. 2b, but also includes the baseband pulse shaping and the radio frequency filter.

It should be supplemented that FIG. 2b is a diagram of a principle of sending a signal and receiving a signal. On a signal transmitting side, to-be-sent data is used to generate a baseband signal, the baseband signal is processed to obtain a radio frequency signal, and the radio frequency signal is sent through the physical channel. On a signal receiving side, a radio frequency signal is received through the physical channel, the radio frequency signal is processed to obtain a baseband signal, and then the baseband signal is processed to obtain demodulated data.

### 2-1. Orthogonal frequency division multiplexing (orthogonal frequency division multiplexing, OFDM)

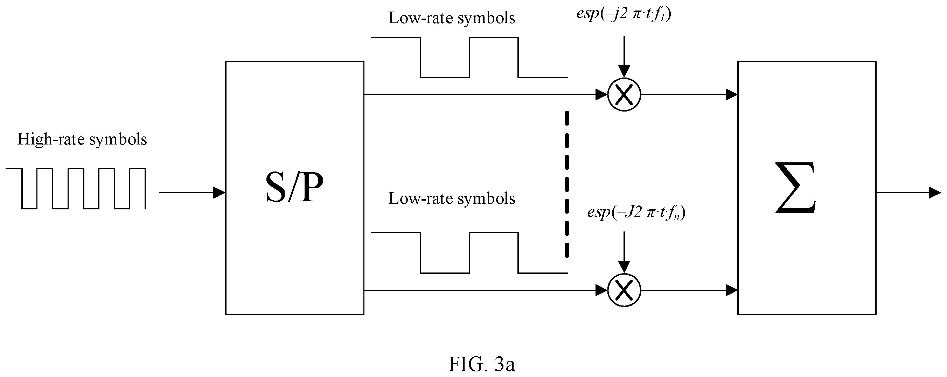

When high-rate symbol streams are sent in series, duration *T*_{symb} of a symbol is usually far less than an MDS (assumed to be represented by *T*_{d}), and inter-symbol interference (inter-symbol interference, ISI) is generated. As shown in FIG. 3a, in an OFDM communication system, a high-rate symbol stream is serial-to-parallel (serial-to-parallel, S/P) converted into N substreams, and each sub-stream is modulated on one subcarrier. In this way, duration of a symbol transmitted on each subcarrier is increased by N times, making the duration of the symbol apparently greater than *T*_{d}.

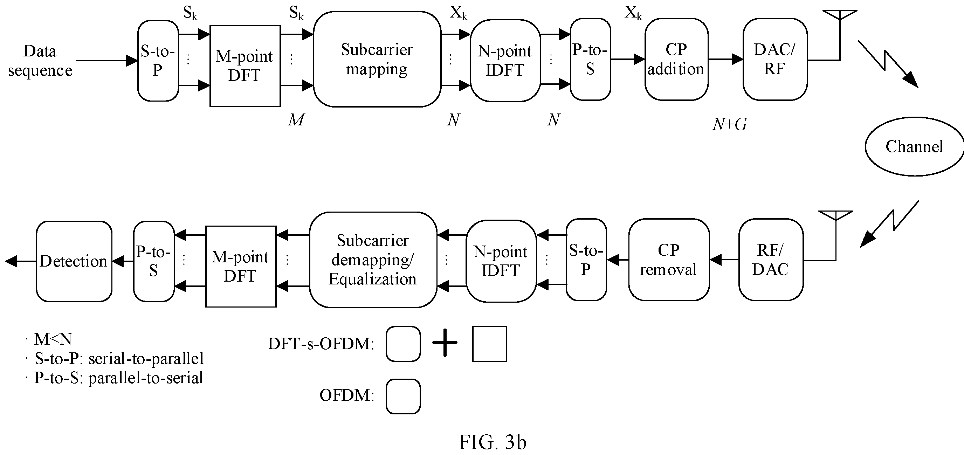

FIG. 3b is a typical block diagram of an OFDM system. In FIG. 3b, a serial data sequence (data sequence) is S/P (namely, a block with S-to-P in FIG. 3b) converted into an *M-*dimensional data block **S***ₖ* = [*Sₖ*[0]*, Sₖ*[1]*, ·*·*·, Sₖ*[*M -* 1]]^{T}, where a subscript *k* represents a sequence number of an OFDM symbol. Through subcarrier mapping (subcarrier mapping), the *M-*dimensional data block carried by **S***ₖ* is modulated on *M* subcarriers in *N* subcarriers, and the remaining (*N - M*) subcarriers may be understood as being modulated by zero. A group of *N* complex time domain sampling points **x***ₖ* = [*xₖ*[0]*, xₖ*[1]*, ···, xₖ*[*N -* 1]]^{T} are obtained through *N*-point inverse discrete Fourier transform (inverse discrete Fourier transform, IDFT) on an *N-*dimensional data vector **X***ₖ*.

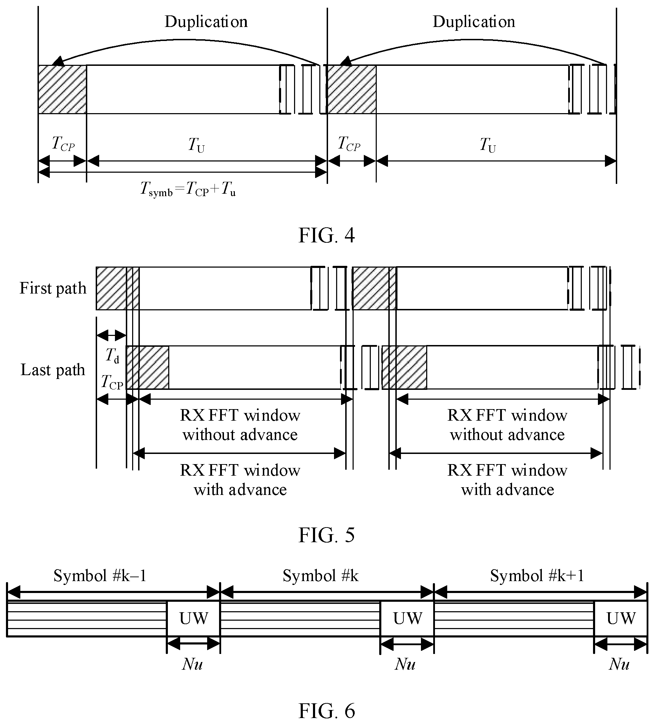

To generate the OFDM signal, CP addition (CP addition) is performed, that is, a guard domain is inserted at a start position of each OFDM symbol, to eliminate ISI caused by multipath propagation. The guard domain is obtained by adding a CP to the start position of the OFDM symbol. As shown in FIG. 4, last *G* sampling points of **x***ₖ* are copied and appended to a start position of **x***ₖ*, to obtain a time domain OFDM signal **x̃***ₖ =* [*xₖ*[*N - G], ··· , xₖ*[*N -* 1], *xₖ*[0], *xₖ*[1], ··· *, xₖ*[*N -* 1]]^{T}. In this way, the OFDM symbol includes valid data **x***ₖ* and the cyclic prefix (redundant data).

It should be supplemented that in terms of a concept of a CP cut-off point, the CP is equal to the last *G* sampling points (namely, *xₖ*[*N - G*],*··· , xₖ*[*N -* 1]) of **x***ₖ*, and therefore the CP cut-off point corresponds to a sampling index *N* - *G* - 1, that is, a next sampling value of the CP cut-off point is equal to a first value of the CP.

To completely eliminate the ISI, a length of the CP is greater than or equal to the maximum delay spread *T*_{d}. *T*ₛ is defined as a sampling interval, namely, a time interval between two adjacent sampling points *xₖ*[*n*] and *xₖ*[*n* + 1]. Correspondingly, that the length of the CP is greater than or equal to the maximum delay spread *T*_{d} may be understood as: $G \geq {N}_{d} = \left⌈\frac{{T}_{d}}{{T}_{s}}\right⌉$, where $\left⌈⋅\right⌉$ represents a rounding-up operator.

On a signal receiving side, inverse processing is performed to demodulate the OFDM signal. It is assumed that a received signal with time and frequency synchronization and a length of a CP not less than *T*_{d} is obtained. After a CP removal operation (that is, removing of first *G* sampling values from the received signal) is performed, a data block including *N* sampling values and without the ISI is obtained, and is further equal to circular convolution of the OFDM symbol **x***ₖ* and a channel impulse response. Then, fast Fourier transform (fast Fourier transform, FFT) is performed to convert the time domain circular convolution into point-wise multiplication in frequency domain, and channel equalization is completed using frequency domain single-tap equalization.

However, in an actual link, a timing synchronization error may exist. To minimize adverse impact of the ISI when the timing synchronization error exists, a receiver typically advances a position of an FFT window (namely, an RX FFT window) on a receiving side, as shown in FIG. 5. A forward movement value is typically 10% to 20% of the length of the CP. That is, when there is no timing synchronization error, the length of the CP is equivalent to reducing 10% to 20%. If a sum of *T*_{d} and the forward movement value of the RX FFT window exceeds the length of the CP, the symbol is also affected by the ISI and ICI. For example, a signal corresponding to a last path cannot completely fall within the RX FFT window, or mathematically, a signal from which the CP is removed is not circular convolution of **x***ₖ* and the channel impulse response.

In this application, that the CP is insufficient (or deficient) may be understood as that the CP is less than the MDS, or the CP is less than a sum of the MDS and the timing synchronization error.

In other words, when the length of the CP is sufficient, the ISI can be avoided, and linear convolution of a channel can be converted into the circular convolution, to enable low-complexity frequency domain channel equalization.

It should be noted that cost of using the CP is reduction of spectral efficiency, because the CP part carries the redundant data. A spectral efficiency loss is *T*_{CP}/*T*_{symb}, where *T*_{CP} is duration of the CP, and *T*_{symb} is duration of one OFDM symbol. *T*_{symb} = *T*_{CP} + *T*ᵤ, and *T*ᵤ *= NT*ₛ *=* 1/Δ*f*, where Δ*f* is a subcarrier spacing (subcarrier spacing, SCS), and a physical meaning of *T*ᵤ is duration of the valid data **x***ₖ*.

### 2-2. Discrete Fourier transform spreading orthogonal frequency division multiplexing (discrete Fourier transform spreading OFDM, DFT-s-OFDM)

As shown in FIG. 3b, DFT-s-OFDM defines a data block **s***ₖ* transmitted in time domain. There is additional discrete Fourier transform (discrete Fourier transform, DFT) processing before an OFDM processing process, that is, an *M*-point DFT operation is performed on each data block **s***ₖ* including *M* pieces of data. By this operation, a DFT-s-OFDM signal has a single-carrier characteristic, and has a peak to average power ratio (peak to average power ratio, PAPR) that is much lower than that of a multi-carrier signal like an OFDM signal. Therefore, with same power amplification, DFT-s-OFDM may provide higher output power and higher power amplification efficiency, thereby improving coverage and reducing energy consumption. Coverage and power consumption advantages of DFT-s-OFDM are particularly obvious on a terminal device side. Therefore, DFT-s-OFDM is applied to uplink transmission in a long term evolution (long term evolution, LTE) communication system or a new radio (new radio, NR) communication system.

**s***ₖ* may include a modulation symbol and/or a redundant signal sampling point.

The modulation symbol may be understood as a modulation symbol obtained by modulating a (coded) bit stream. A modulation scheme may include pulse amplitude modulation (pulse amplitude modulation, PAM), phase shift keying (phase shift keying, PSK), quadrature amplitude modulation (quadrature amplitude modulation, QAM), offset quadrature amplitude modulation (offset quadrature amplitude modulation, OQAM), amplitude phase shift keying (amplitude phase shift keying, APSK), and the like.

The redundant signal sampling point may include a phase tracking reference signal (phase tracking reference signal, PTRS) sampling point, a unique word (unique word), zero, and the like.

### 2-3. Time domain linear convolution single carrier (single carrier, SC) modulation

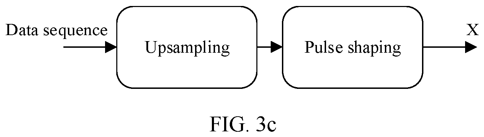

As shown in FIG. 3c, a signal **x** is generated after shaping filter is performed on a data sequence (data sequence). Shaping filter includes two processes: upsampling (upsampling) and filtering (namely, linear convolution of an upsampling signal and a pulse shaping (pulse shaping)).

The data sequence includes a modulation symbol and/or a redundant signal sampling point. The modulation symbol may be a modulation symbol obtained by modulating a (coded) bit stream. A modulation scheme may include pulse amplitude modulation (pulse amplitude modulation, PAM), phase shift keying (phase shift keying, PSK), quadrature amplitude modulation (quadrature amplitude modulation, QAM), offset quadrature amplitude modulation (offset quadrature amplitude modulation, OQAM), amplitude phase shift keying (amplitude phase shift keying, APSK), and the like.

The redundant signal sampling point may include a phase tracking reference signal (phase tracking reference signal, PTRS) sampling point, a unique word (unique word), zero, and the like.

In DFT-s-OFDM, an upsampling factor is *N*/*M*, and the pulse shaping has a period, where a length of the period is *N*. Therefore, a DFT-s-OFDM signal **x***ₖ* may be understood as circular convolution of the data block **s***ₖ* and the pulse shaping.

### 2-4. Single-carrier frequency domain equalization (single-carrier frequency domain equalization, SC-FDE)

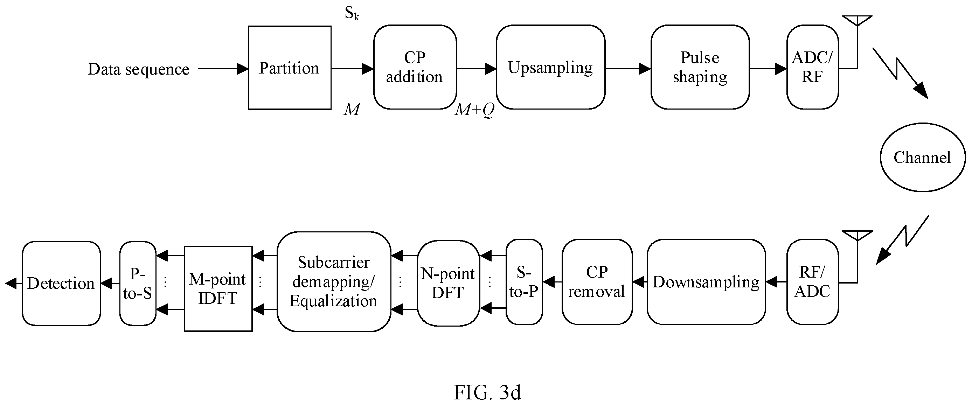

As shown in FIG. 3d, based on time domain linear convolution SC modulation, SC-FDE first divides a data sequence into a series of data blocks **s***ₖ* with a length of *M* via a partition (partition) module. A CP with a length of *Q* is added to each data block, that is, last *Q* pieces of data of **s***ₖ* are copied to the front of **s***ₖ*. In this case, a CP cut-off point corresponds to a data index *M - Q -* 1*.*

The CP exists, and therefore linear convolution of a multipath channel is converted into circular convolution, and a receiver machine can use low-complexity single-tap frequency domain channel equalization.

### 3. Length of a CP in a related protocol

For a continuous-time signal, lossless sampling may be performed on the continuous-time signal according to the Nyquist sampling theorem, that is, an original continuous-time signal may be losslessly reconstructed based on a discrete-time sampling value. It is assumed that duration of the continuous-time signal is *t*₀, and a sampling interval is *T*ₛ*. t*₀/*T*ₛ sampling points are generated through sampling. When the sampling interval *T*ₛ is determined, a length of the continuous-time signal may be described by using a quantity of included sampling points.

In new radio (new radio, NR), a basic time unit is *T*_{c} = 1/(4096 · 480 · 10³) second. In addition, in an NR protocol, a time length is described by using 'a quantity of basic time units of time'. For example, the protocol is described as follows from a perspective of a formula: ${N}_{u}^{μ} = 2048 κ ⋅ {2}^{- μ}$ ${N}_{CP , l}^{μ} = \left\{\begin{matrix}512 κ ⋅ {2}^{- μ} \\ 144 κ ⋅ {2}^{- μ} + 16 κ \\ 144 κ ⋅ {2}^{- μ}\end{matrix} \begin{matrix}ECP \\ NCP , l = 0 or l = 7 ⋅ {2}^{μ} \\ NCP , l \neq 0 or l \neq 7 ⋅ {2}^{μ}\end{matrix}\right.$

Herein, ${N}_{u}^{μ}$ represents an OFDM symbol period, ${N}_{CP , l}^{μ}$ represents a length of a CP, $l ∈ \left\{0,1,…,{N}_{slot}^{subframe , μ}{N}_{symb}^{slot}-1\right\}$ represents an index number of an OFDM symbol in a subframe, ${N}_{symb}^{slot}$ represents a quantity of OFDM symbols included in one slot, ${N}_{slot}^{subframe , μ}$ represents a quantity of slots included in one subframe (duration is 1 ms) when a numerology (numerology) sequence number is *µ*, *κ* = 64, and *µ* represents configuration indexes of numerologies (numerologies).

It can be learned from Formula (1) that NR supports two lengths of the CP: a normal cyclic prefix (normal cyclic prefix, NCP) and an extended cyclic prefix (extended cyclic prefix, ECP). Overheads of the NCP are approximately 144/(2048+144)=6.6%, and overheads of the ECP are approximately 512/(512+2048)=20%. It can be learned that the overheads of the ECP are far higher than the overheads of the NCP.

In addition, Table 1 shows NR supported transmission numerologies (supported transmission numerologies).

**Table 1**

| *µ* | Δ*f* = 2*^{µ}* · 15[kHz] | CP |
|---|---|---|
| 0 | 15 | NCP |
| 1 | 30 | NCP |
| 2 | 60 | NCP and ECP |
| 3 | 120 | NCP |
| 4 | 240 | NCP |

It can be learned from Table 1 that the ECP can be used when *µ* = 2, that is, when a subcarrier spacing is 60 kHz.

### 4. A length of a CP cannot be flexibly configured based on a requirement of a terminal device.

As described above, a manner of adding a CP in a communication system is used to resist a channel delay spread and a timing synchronization error. A length of the CP is a cell-level configuration, that is, CPs configured for all terminal devices in a same cell have a same length. If an MDS in the cell is lower than (or equal to) an NCP, the NCP is configured for all the terminal devices in the cell. If an MDS in the cell is higher than the NCP, an ECP is configured for all the terminal devices in the cell.

For example, a cell-level CP configuration manner causes a large spectral efficiency loss to a terminal device (for example, a terminal device close to a base station) with a low MDS. For example, an MDS for a terminal device corresponds to 20 sampling values (in other words, a length of an MDS is 20), and a symbol valid data part includes 2048 sampling values (in other words, a length of a valid data part is 2048). According to a principle for minimizing overheads of a CP, a length of the CP being 20 can avoid ISI and ICI. However, in a cell-level CP configuration, the length of the CP is a length of an NCP, namely, 144.

For another example, the cell-level CP configuration manner also causes a specific spectral efficiency loss to a terminal device (for example, a terminal device located at a cell edge) whose MDS is higher than the NCP. For example, the MDS exceeds the NCP by 20%. According to a principle for minimizing overheads of a CP, a length of the CP being designed to 144 × 1.2 ≈ 173 can avoid ISI and ICI. However, in a cell-level CP configuration, the length of the CP is a length of an ECP. The length of the ECP is 3.55 times the length of the NCP, which is far greater than a CP extension requirement.

The foregoing describes spectral efficiency losses caused by two cell-level CP configurations to a part of terminal devices in the cell.

That the MDS may exceed the ECP in some communication scenarios is described below. In this case, even if the ECP is used, the CP is insufficient, and a symbol is affected by ISI and ICI. Details are as follows.

In this application, the duration *T*_{CP} of the CP is related to the subcarrier spacing Δ*f*, and an OFDM symbol period *T*ᵤ = 1/Δ*f.* It can be learned with reference to Formula (1) that, when the CP is configured as the NCP, ${T}_{CP} = \frac{9}{128} {T}_{u}$, or when the CP is configured as the ECP, ${T}_{CP} = \frac{1}{4} {T}_{u}$*.*

Table 2 shows duration of the NCP and the ECP corresponding to different Δ*f*. In the table, "≈" represents approximately equal to. The duration may be obtained by rounding off according to the formula.

**Table 2**

| | | | | | | | | | |
|---|---|---|---|---|---|---|---|---|---|
| Δ*f* (kHz) | 15 | 30 | 60 | 120 | 240 | 480 | 960 | 1920 | **3840** |
| NCP (ns) | 4687.5 | ≈2344 | ≈1172 | ≈586 | ≈293 | ≈146 | ≈73 | ≈37 | **≈18** |
| ECP (ns) | ≈16667 | ≈8333 | ≈4167 | ≈2083 | ≈1042 | ≈521 | ≈260 | ≈130 | **≈65** |

It can be learned from Table 2 that a larger increase of Δ*f* indicates shorter duration of the NCP and the ECP. When the subcarrier spacing increases to 3840 kHz, a length of the ECP is approximately 65 ns, which corresponds to a case in which a distance difference between a first path and a last path is 19.5 meters, that is, 19.5 = 3 · 10⁸ · 65 · 10⁻⁹. However, in a millimeterwave channel, in an indoor NLOS condition, an MDS may be up to 70 ns, and exceeds the ECP (for example, the duration of ECP is 65 ns). In this case, the ECP is used, and a symbol is also affected by ISI and ICI.

In conclusion, in a related technology, for example, in an LTE or NR communication system, the length of the CP cannot be flexibly configured based on the requirement of the terminal device.

### 5. Flexible CP solution based on a unique word (unique word, UW)

In this solution, a UW-based symbol may be referred to as a UW symbol. No CP is added to the symbol, and a UW is used to construct an equivalent CP. Therefore, compared with a symbol including a CP, the UW symbol can be used to reduce overheads of the CP. As shown in FIG. 6, FIG. 6 shows three consecutive symbols. It can be seen that a tail of each symbol has a UW with a length of *Nᵤ*, and UWs are the same.

The UWs are the same, and therefore a UW at a tail of a previous symbol may be used as an equivalent CP of the current symbol. For example, in FIG. 6, a UW of a first symbol may be used as an equivalent CP of a second symbol, and a UW of the second symbol may be used as an equivalent CP of a third symbol.

The following separately describes, based on symbol modulation schemes, methods for generating the UW symbol.

### First method: UW-DFT-s-OFDM

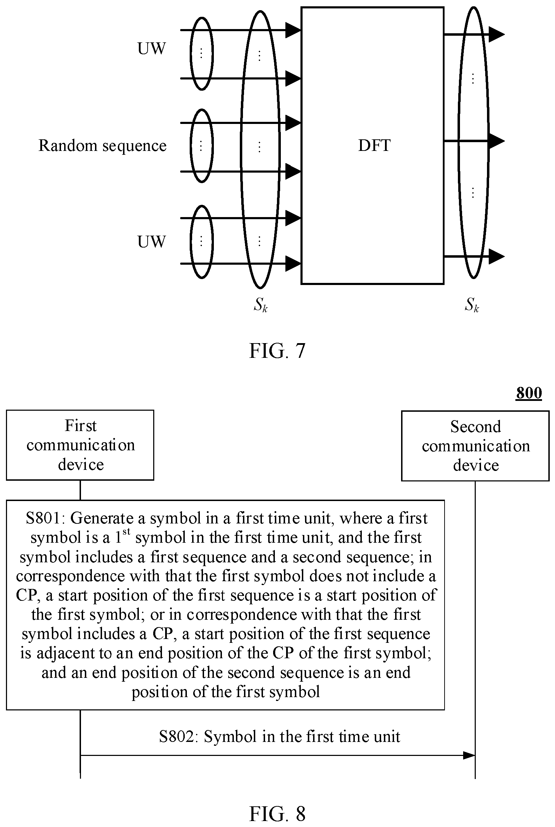

With reference to FIG. 3b, to enable a tail of the DFT-s-OFDM symbol **x***ₖ* to be a UW, DFT may be indicated to input **s***ₖ* whose tail is the UW, as shown in FIG. 7. In FIG. 7, a random sequence corresponds to a service data part. Preferably, a head of **s***ₖ* may also be a UW, as shown in FIG. 7.

In addition, **x***ₖ* is circular convolution of **s***ₖ* and pulse shaping, and therefore the tail of **x***ₖ* is not only determined by the tail of **s***ₖ*, but also subject to the head of **s***ₖ*. To enable the tail UW of **x***ₖ* to be equal to or slightly different from a tail UW of **x**_{*k*+1}, heads of **s***ₖ* and **s**_{*k*+1} may have same UWs.

### Second method: UW-time domain linear convolution SC modulation

Compared with DFT-s-OFDM modulation, time domain linear convolution SC modulation is used to output **x***ₖ* being linear convolution of **s***ₖ* and pulse shaping. Therefore, for this difference, in UW-time domain linear convolution SC modulation, only a tail of the input **s***ₖ* needs to be a UW, and a head of **s***ₖ* does not need to be a UW.

6. A flexible CP solution based on a UW has the following problem: A 1^{st} symbol of a slot has no CP or has a short CP.

In this solution, no CP is added to a symbol, and therefore the symbol in this solution cannot be aligned with an LTE/NR symbol. Therefore, it is considered that the symbol in this solution is aligned with the LTE/NR symbol in one slot. In LTE, a symbol subcarrier spacing is 15 kHz. In NR, a symbol subcarrier spacing is 15 · 2*^{µ}* kHz, where *µ* = 0,1,2, .... A symbol length is ( ${N}_{u}^{μ} + {N}_{CP , l}^{μ}$), where ${N}_{u}^{μ}$ and ${N}_{CP , l}^{μ}$ are given by Formula (1). With reference to Formula (1), an NCP (that one slot includes 14 NR symbols) is considered, and *l* = *0 or l* = 7. 2*^{µ}.* In slot alignment, Formula (2) and Formula (3) respectively provide a quantity of UW symbols ${N}_{uw , μ}^{slot}$ that can be included in one slot and a remaining quantity *N*_{1st uw,*µ*}. The remaining quantity may be used as a CP of a first UW, where $\left⌊⋅\right⌋$ represents rounding down. ${N}_{uw , μ}^{slot} = \left\{\begin{matrix}15 , μ = 0 , 1 \\ \left⌊\frac{\left(2048⋅{2}^{- μ}+144⋅κ⋅{2}^{- μ}\right) ⋅ 14 + 16}{2048 ⋅ {2}^{- μ}}\right⌋ , μ = 2 , 3 , ⋯\end{matrix}\right.$ ${N}_{1 st uw , μ} = \left\{\begin{matrix}0 , μ = 0 , 1 \\ \left(2048κ⋅{2}^{- μ}+144κ⋅{2}^{- μ}\right) ⋅ 14 + 16 κ - {N}_{uw , μ}^{slot} ⋅ 2048 κ ⋅ {2}^{- μ} , μ = 2 , 3 , ⋯\end{matrix}\right.$

Herein, ${N}_{uw , μ}^{slot}$ represents the quantity of UW symbols included in the slot, and *N*_{1st uw,*µ*} represents the remaining quantity, namely, a length of the CP of the 1^{st} UW symbol in the slot.

It can be learned from Formula (2) and Formula (3) that values of ${N}_{uw , μ}^{slot}$ and *N*_{1st uw,*µ*} vary with different values of *µ*, as shown in Table 3.

**Table 3**

| *µ* | SCS (kHz) | Length of UW-DFTs | ${N}_{uw , μ}^{slot}$ | *N*_{1st uw,*µ*} | NCP |
|---|---|---|---|---|---|
| 0 | 15 | 2048*κ* | 15 | 0 | 144*κ* |
| 1 | 30 | 1024*κ* | 15 | 0 | 72*κ* |
| 2 | 60 | 512*κ* | 15 | 8*κ* | 36*κ* |
| 3 | 120 | 256*κ* | 15 | 12*κ* | 18*κ* |
| 4 | 240 | 128*κ* | 15 | 14*κ* | 9*κ* |
| 5 | 480 | 64*κ* | 15 | 15*κ* | 4.5*κ* |
| 6 | 960 | 32*κ* | 15 | 15.5*κ* | 2.25*κ* |
| 7 | 1920 | 16*κ* | 15 | 15.75*κ* | 1.125*κ* |
| 8 | 3840 | 8*κ* | 16 | 7.875*κ* | 0.5625*κ* |
| 9 | 7680 | 4*κ* | 18 | 3.9375*κ* | 0.28125*κ* |

It can be learned from Table 3 that when *µ* = 0 or 1, the 1^{st} UW symbol in the slot does not include the CP; and when *µ* = 2 or 3, *N*_{1st uw,*µ*} is shorter than the NCP, and the CP is insufficient.

It should be supplemented that Table 5 shows values of ${N}_{uw , μ}^{slot}$ and *N*_{1st uw,*µ*} when the UW symbol and the NR symbol are aligned in a slot. For the NR symbol, when a length of a CP is calculated, *l* = *0 or l* = 7. 2*^{µ}*. For details, refer to the description of Formula (1). Details are not described again.

### 7. Solution for shortening a 1^{st} UW symbol

To resolve a problem that a 1^{st} UW symbol has no CP or has an excessively short CP, a technical solution, namely, shortening a length of the 1^{st} UW symbol, is provided in related technologies, to place a CP.

For example, with reference to Table 3, when *µ* = 0, one slot includes 15 UW symbols, that is, a length of each symbol is 1/15 of a length of the slot. In this technology, the length of the 1^{st} UW symbol is shortened, for example, shortened to 1/20 of the length of the slot, so that the slot with an idle length (for example, equal to 1/15 of the length of the slot minus 1/20 of the length of the slot) is used to place the CP of the 1^{st} UW symbol.

To shorten the length of the 1^{st} UW symbol, a subcarrier spacing may be increased. To be specific, a subcarrier spacing Δ*f*1 is used for symbols 2 to 15 (namely, a 2^{nd} UW symbol to a 15^{th} UW symbol), and a subcarrier spacing Δ*f*2 is used for a symbol 1 (namely, the 1^{st} UW symbol), where Δ*f*2 > Δ*f*1*.* In other words, a quantity of IFFT sampling points (IFFT size) used when a device on a signal transmitting side generates the symbol 1 is inconsistent with a quantity of IFFT sampling points (IFFT size) used when the device on the signal transmitting side generates the remaining symbols in the slot. To be specific, the device on the signal transmitting side needs two IFFT modules. A device structure is complex, and a process is complex.

Therefore, in a scenario in which one time unit includes a plurality of UW symbols, a 1^{st} symbol has no CP or has an excessively short CP, that is, there is no CP or the CP is insufficient, which affects demodulation performance.

In view of this, this application provides four communication methods, and each method may be applied to the system shown in FIG. 1. The following provides detailed descriptions.

A first communication device generates a symbol in a first time unit, where a first symbol is a 1^{st} symbol in the first time unit, and the first symbol includes a first sequence and a second sequence; in correspondence with that the first symbol does not include a CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol; and the first communication device sends the symbol in the first time unit.

That the start position of the first sequence is adjacent to the end position of the CP of the first symbol may be understood as that a 1^{st} value of the first sequence is a next value of the CP of the first symbol. To be specific, the start position of the first sequence is a next position after the end position of the CP. In other words, 'adjacent' in this application may be understood as directly adjacent.

In this way, the first sequence is set at a head of the 1^{st} symbol (namely, the first symbol) in the first time unit. In correspondence with a case in which the first symbol does not include the CP, the first sequence may be considered as an equivalent CP of the first symbol. In correspondence with that the first symbol includes the CP, the CP of the first symbol and the first sequence may be considered as an equivalent CP of the first symbol. In other words, the first sequence exists, and therefore a length of the CP of the first symbol is extended. This helps better reduce ISI and ICI and improve demodulation performance.

With reference to FIG. 8 to FIG. 14, the following describes in detail a communication method according to an embodiment of this application. The communication method 800 according to this embodiment of this application includes the following steps.

S801: A first communication device generates a symbol in a first time unit.

The first communication device is described as follows.

The method may be performed by the first communication device. Unless otherwise specified, the "first communication device" in this application may be the first communication device, may be a component (for example, a processor, a chip, or a chip system) in the first communication device, or may be a logic module or software that can implement all or some functions of the first communication device.

Uplink transmission is used as an example. The first communication device may be a terminal device.

Downlink transmission is used as an example. The first communication device may be a network device.

The first time unit is described as follows.

The first time unit may include one or several slots (slots), one or several mini-slots (mini-slots), one or several subframes, one or several frames, or the like. In this application, a slot is used as an example to describe the first time unit.

The symbol in the first time unit is described as follows.

For example, the first time unit is a slot, and the first time unit may include a plurality of symbols, as shown in Table 3.

A 1^{st} symbol, namely, the first symbol, in the first time unit is described as follows.

The first symbol includes a first sequence and a second sequence.

In a first aspect, positions of the first sequence and the second sequence in the first symbol are described as follows.

In correspondence with that the first symbol does not include a CP, a start position of the first sequence is a start position of the first symbol. In correspondence with that the first symbol includes a CP, a start position of the first sequence is adjacent to an end position of the CP of the first symbol.

An end position of the second sequence is an end position of the first symbol.

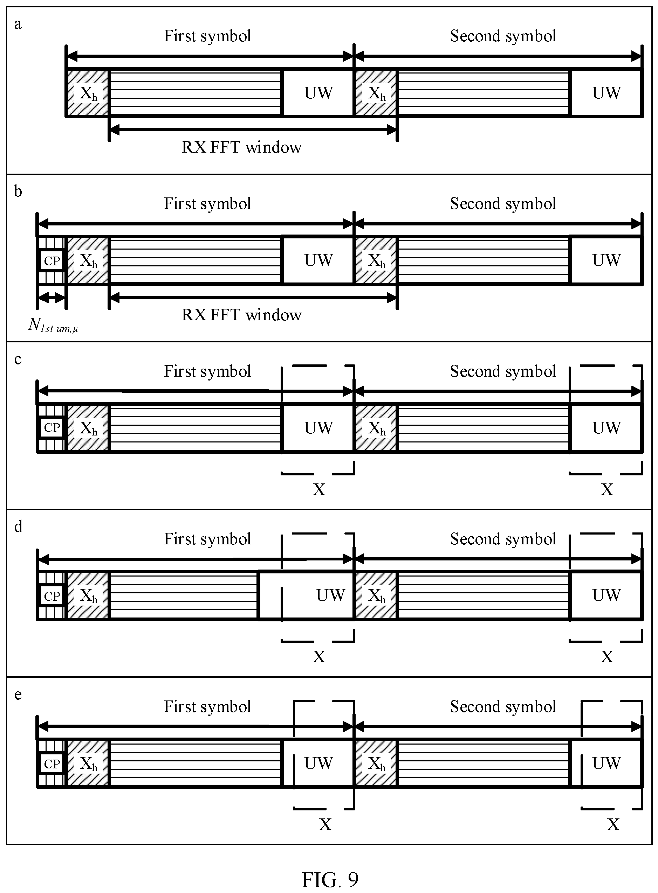

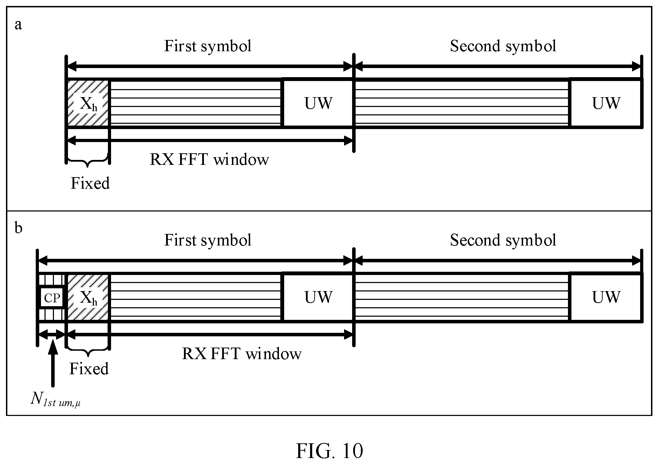

FIG. 9 or FIG. 10 is used as an example. In a box with a letter a, a first symbol does not include a CP. In a box in which a letter b is located, a first symbol includes a CP. For the first symbol, a first sequence may be shown in a slash filled grid with *Xₕ*, and a second sequence may be shown in a non-filled grid with a UW.

In a second aspect (optionally), content of the first sequence and the second sequence is described as follows.

In a first possible implementation, the first time unit further includes a second symbol. The second symbol is a symbol immediately following the first symbol, and the second symbol includes a third sequence and a fourth sequence. A start position of the third sequence is a start position of the second symbol, and an end position of the fourth sequence is an end position of the second symbol. The third sequence is the same as the first sequence, and at least a part of the fourth sequence is the same as at least a part of the second sequence.

FIG. 9 is used as an example. For a second symbol, a third sequence may be shown in a slash filled grid with *Xₕ*, and a fourth sequence may be shown in a non-filled grid with a UW. In other words, the first sequence at a head of the first symbol is the same as the third sequence at a head of the second symbol. In addition, the second sequence at a tail of the first symbol is the same as the fourth sequence at a tail of the second symbol.

It should be noted that at least the part of the fourth sequence is the same as at least the part of the second sequence may be understood as that a signal with a length of x at a tail of the fourth sequence is the same as a signal with a length of x at a tail of the second sequence, where x is a positive integer.

FIG. 9 is used as an example. In a box with a letter c, as shown by dashed-line boxes, a value of x is equal to a length of the second sequence, and a value of x is equal to a length of the fourth sequence. This means that all of the fourth sequence is the same as all of the second sequence.

FIG. 9 is used as an example. In a box with a letter d, as shown by dashed-line boxes, a value of x is less than a length of the second sequence, and a value of x is equal to a length of the fourth sequence. This means that all of the fourth sequence is the same as a part of the second sequence.

Alternatively, on the contrary, a value of x is equal to a length of the second sequence, and a value of x is less than a length of the fourth sequence, which is not shown in a box with a letter d. This means that a part of the fourth sequence is the same as all of the second sequence.

FIG. 9 is used as an example. In a box with a letter e, as shown by dashed-line boxes, a value of x is less than a length of the second sequence, and a value of x is less than a length of the fourth sequence. This means that a part of the fourth sequence is the same as a part of the second sequence.

It is easy to understand that as shown in FIG. 9, the second sequence and the fourth sequence are UWs. It may be understood that the second sequence at the tail of the first symbol is the UW, that is, the tail of the first symbol includes the UW that is used as an equivalent CP of the second symbol. Similarly, the fourth sequence at the tail of the second symbol is the UW, that is, the tail of the second symbol includes the UW that is used as an equivalent CP of a next symbol of the second symbol.

Optionally, in the first possible implementation, the first sequence includes a first UW and/or service data. The service data includes at least a part of service data carried by the first symbol, or at least a part of service data carried by the second symbol.

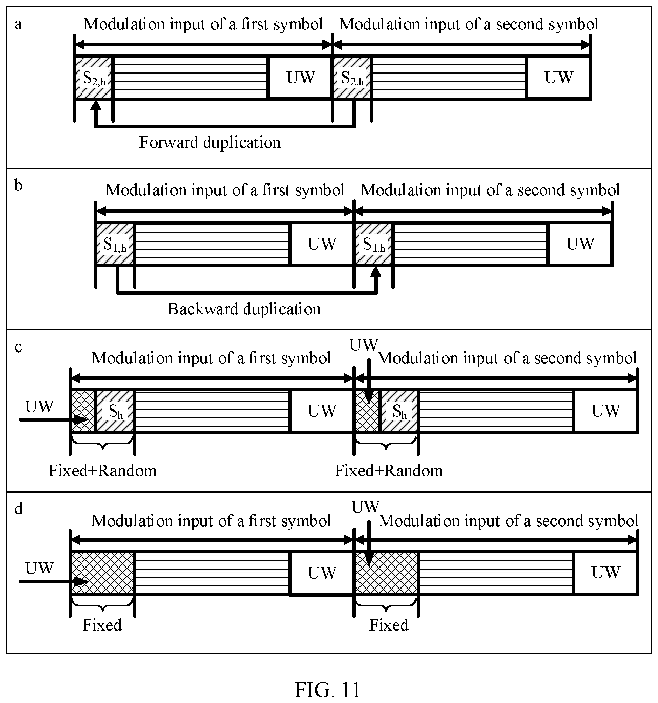

FIG. 11 is used as an example. In a box with a letter a, a first sequence includes service data, but does not include a first UW. In addition, a third sequence includes service data, but does not include a first UW. The service data of the first sequence is the same as the service data of the third sequence. The service data of the first sequence may come from a part of service data carried by the second symbol. It may be understood that forward copy is performed when a first symbol and a second symbol are modulated. Correspondingly, a modulation input of the first symbol includes the part of service data carried by the second symbol, as shown by a slash filled grid with *S*₂*_{,h}.*

FIG. 11 is used as an example. In a box with a letter b, a first sequence includes service data, but does not include a first UW. In addition, a third sequence includes service data, but does not include a first UW. The service data of the first sequence is the same as the service data of the third sequence. The service data of the third sequence may come from a part of service data carried by the first symbol. It may be understood that backward copy is performed when the first symbol and the second symbol are modulated. Correspondingly, a modulation input of the second symbol includes the part of service data carried by the first symbol, as shown by a slash filled grid with *S*_{1,}*ₕ.*

FIG. 11 is used as an example. In a box with a letter c, a first sequence includes service data and a first UW. In addition, a third sequence includes service data and a first UW.

The service data of the first sequence is the same as the service data of the third sequence, as shown by a slash filled grid with *Sₕ.* The service data of the first sequence may come from a part of service data carried by the second symbol, that is, forward copy is performed. Refer to the descriptions in the foregoing paragraphs. The service data of the third sequence may come from a part of service data carried by the first symbol, that is, backward copy is performed. Refer to the descriptions in the foregoing paragraphs.

The first UW of the first sequence and the first UW of the third sequence are shown by grid line filled grids.

FIG. 11 is used as an example. In a box with a letter d, a first sequence includes a first UW, but does not include service data. In addition, a third sequence includes a first UW, but does not include service data. The first UW of the first sequence and the first UW of the third sequence are shown by grid line filled grids.

It should be supplemented that when the first sequence includes the service data, the first symbol may use DFT-s-OFDM modulation or time domain linear convolution SC modulation.

In a second possible implementation, the first sequence is a second UW.

FIG. 10 is used as an example. The first sequence is shown by a slash filled grid with *Xₕ,* and a sequence corresponding to *Xₕ* is a second UW, namely, fixed data.

Optionally, in the second possible implementation, the second sequence includes a third UW.

FIG. 10 is used as an example. The second sequence may be shown by a non-filled grid with a UW. It may be understood that the second sequence at the tail of the first symbol is the UW, that is, the tail of the first symbol includes the UW that is used as an equivalent CP of the second symbol.

It should be supplemented that in the communication method 800 in this embodiment of this application, a UW is included at a tail of each symbol, and at least a part of UWs at tails of any two adjacent symbols are the same. In other words, the first time unit includes an i^{th} symbol and a j^{th} symbol, and the i^{th} symbol is a symbol immediately preceding the j^{th} symbol. The i^{th} symbol includes an i^{th} UW, and an end position of the i^{th} UW is an end position of the i^{th} symbol. The j^{th} symbol includes a j^{th} UW, and an end position of the j^{th} UW is an end position of the j^{th} symbol. A signal with a length of x at a tail of the i^{th} UW is the same as a signal with a length of x at a tail of the j^{th} UW, where x is a positive integer.

For example, if the i^{th} symbol is the first symbol, the j^{th} symbol is the second symbol. Alternatively, if the i^{th} symbol is the second symbol, the j^{th} symbol is a symbol immediately following the second symbol. Alternatively, the i^{th} symbol is a symbol behind the second symbol. Correspondingly, the j^{th} symbol is a symbol immediately following the i^{th} symbol. In this case, the i^{th} UW of the i^{th} symbol may be considered as an equivalent CP of the j^{th} symbol.

In a third aspect (optionally), lengths of the first sequence and the second sequence are described as follows.

A length of the first sequence is determined based on a length of the CP of the first symbol and a maximum delay spread of the first symbol.

In a first possible implementation, uplink transmission is used as an example. The first symbol is an uplink symbol.

Design 1: The length of the first sequence is determined based on the length of the CP of the first symbol and the maximum delay spread of the first symbol. The length of the first sequence may satisfy the following formula: ${x}_{h} + {N}_{1 st uw , μ} \geq {MDS}_{0}$

Herein, *xₕ* represents the length of the first sequence, *N*_{1st uw,*µ*} represents the length of the CP of the first symbol, and *MDS*₀ represents the maximum delay spread of the first symbol.

Design 2: The length of the first sequence is determined based on the length of the CP of the first symbol, the maximum delay spread of the first symbol, and a maximum delay spread of a third symbol, where the third symbol is a symbol immediately preceding the first symbol. The length of the first sequence may satisfy the following formula: ${x}_{h} + {N}_{1 st uw , μ} \geq max \left({MDS}_{0}, {MDS}_{pre}\right)$

Herein, *xₕ* represents the length of the first sequence, *N*_{1st uw,*µ*} represents the length of the CP of the first symbol, *MDS*₀ represents the maximum delay spread of the first symbol, *MDSₚᵣₑ* represents the maximum delay spread of the third symbol, and *max* () represents a maximum value operator.

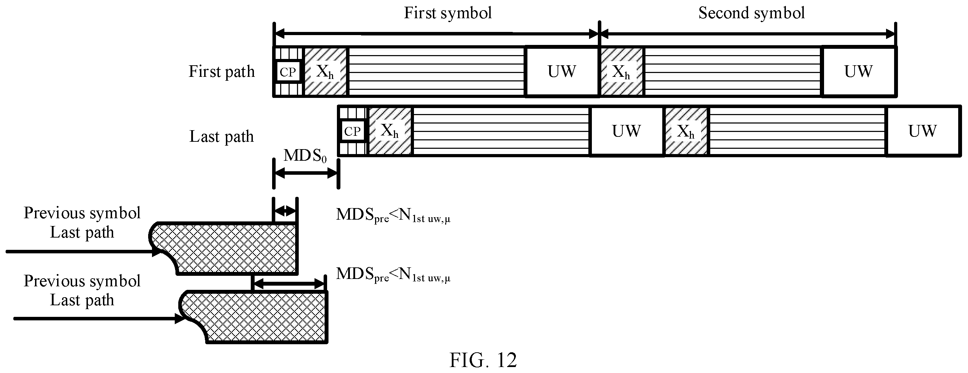

It is easy to understand that FIG. 12 is used as an example. *MDSₚᵣₑ* may be greater than or equal to *MDS*₀, or may be less than *MDS*₀*.* If *MDSₚᵣₑ > xₕ + N*_{1*st uw,µ*}, the first symbol is affected by ISI of the previous symbol (namely, the third symbol); or if *MDS*₀ *> xₕ + N*_{1*st uw,µ*}, circular convolution cannot be formed, and in this case the first symbol is affected by ICI.

When the first communication device is a terminal device, and the terminal device cannot learn of *MDSₚᵣₑ*, the length of the first sequence may be determined based on Design 1, so that impact of the ICI on the first symbol is minimized. Further, if *MDS*₀ ≥ *MDSₚᵣₑ*, impact of the ISI on the first symbol can also be minimized.

When the first communication device is a terminal device, and the terminal device can learn of *MDSₚᵣₑ,* the length of the first sequence may be determined based on Design 2, so that impact of the ICI and the ISI on the first symbol is minimized.

It should be noted that in Formula (4) and Formula (5), the parameter *N*_{1*st uw,µ*} is described as follows: In correspondence with that the first symbol includes the CP, *N*_{1*s uw,µ*} represents the length of the CP of the first symbol. In correspondence with that the first symbol does not include the CP, *N*_{1*st uw,µ*} = 0. In other words, the foregoing Formula (4) may be replaced with *xₕ* ≥ *MDS*₀*,* and the foregoing Formula (5) may be replaced with *xₕ* ≥ *max* (*MDS*₀*, MDSₚᵣₑ*)*.*

Optionally, in the first possible implementation, the length of the first sequence may be further determined based on another reference factor if the following four cases are satisfied: ${x}_{h} + {N}_{1 st uw , μ} \leq {MDS}_{0} based on Design 1 ;$ ${x}_{h} \leq {MDS}_{0} based on Design 1 ;$ ${x}_{h} + {N}_{1 st uw , μ} \leq max \left({MDS}_{0}, {MDS}_{pre}\right) based on Design 2 ;$ and ${x}_{h} \leq max \left({MDS}_{0}, {MDS}_{pre}\right) based on Design 2$

For example, the length of the first sequence is further determined based on at least one of the following: a modulation and coding scheme (modulation and coding scheme, MCS) of the first symbol, an error vector magnitude (error vector magnitude, EVM) required for the first symbol, a symbol type of the first symbol, or a transmission payload of the transmitted symbol. The sent symbol may be understood as a symbol sent by the first communication device in the first time unit.

In this application, as shown in Table 4, one MCS index (index) corresponds to one modulation scheme and code rate. A smaller MCS index indicates a lower modulation order (modulation order), a lower code rate, and lower spectral efficiency, but a stronger anti-interference (like the ISI and the ICI) capability.

In this application, the MCS is a scheme for coding and modulating an original bit stream. The MCS may include three parameters: a modulation order, a target code rate, and spectral efficiency. A combination of the three parameters may be represented by using an MCS index. As shown in Table 4, an MCS index is used to uniquely identify an MCS.

**Table 4**

| MCS index | Modulation order | Target code rate | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

In Table 4, the second column is a modulation order. For example, 2, 4, and 6 represent QPSK, 16QAM, and 64QAM respectively. The target code rate in the third column represents a product of a code rate (for example, represented by R) and 1024, where R<1. For example, 120 in the first row and the third column in Table 4 represents R×1024, that is, a code rate R=120/1024=0.1172.

It should be noted that the modulation and coding scheme may also be referred to as a modulation and coding strategy. The MCS index may also be referred to as an MCS number, and the MCS index and the MCS number are interchangeable.

When a modulation order used by the first symbol is low, for example, quadrature phase shift keying (quadrature phase shift keying, QPSK), and/or a code rate is low, for example, 1/3, the first symbol has a specific anti-interference capability. Alternatively, it may be understood that even if the first symbol is affected by specific interference, the interference does not significantly reduce demodulation performance of the first symbol. Therefore, when the length of the first sequence is determined, the requirement for no ICI and/or ISI can be relaxed. Design 2 is used as an example, and may be replaced with Formula (6): ${x}_{h} + {N}_{1 st uw , μ} < max \left({MDS}_{0}, {MDS}_{pre}\right)$

In other words, it may be understood that a lower modulation order of the first symbol indicates a shorter length of the first sequence, and/or a lower code rate of the first symbol indicates a shorter length of the first sequence.

In this application, the EVM may be understood as a ratio of an amplitude of an error vector (error vector) to an amplitude of a reference signal (reference signal, RS). The EVM may be expressed as a percentage. The EVM is usually used to measure signal quality of a quadrature amplitude modulation (quadrature amplitude modulation, QAM) signal or a phase shift keying (phase shift keying, PSK) signal.

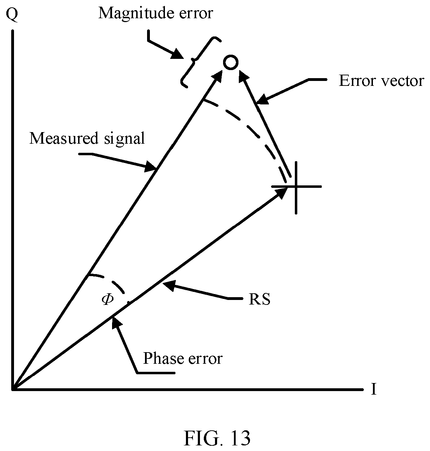

FIG. 13 is used as an example. An EVM may be an error vector between a measured signal (measured signal) and an RS. The error vector is determined based on an amplitude error (magnitude error) and a phase error (phase error).

For example, the EVM satisfies the following formula: $EVM = \sqrt{\frac{{\sum }_{k = 0}^{P - 1} {\left|z\left(k\right)-r\left(k\right)\right|}^{2}}{{\sum }_{k = 0}^{P - 1} {\left|r\left(k\right)\right|}^{2}}}$

Herein, P represents a quantity of symbols, *r*(*k*) represents the reference signal, *z*(*k*) represents the measured signal, and *z*(*k*) *- r*(*k*) represents an error vector.

It is easy to understand that if a symbol has a lower modulation order, a higher EVM (required EVM) is required, which means that the symbol can tolerate a larger error, as shown in Table 5.

**Table 5**

| Modulation scheme | Required EVM |
|---|---|
| QPSK | 17.5% |
| 16QAM | 12.5% |
| 64QAM | 8% |
| 256QAM | 3.5% |

When the EVM required for the first symbol is high (or the EVM needs to be high), the first symbol has the specific anti-interference capability. Alternatively, it may be understood that even if the first symbol is affected by the specific interference, the interference does not significantly reduce demodulation performance of the first symbol. Therefore, when the length of the first sequence is determined, the requirement for no ICI and/or ISI can be relaxed. Design 2 is used as an example, and may be replaced with Formula (6).

In other words, it may be understood that a higher EVM required for the first symbol indicates a shorter length of the first sequence.

In this application, a symbol with a high importance level includes a synchronization symbol (which may be understood as a symbol for carrying a synchronization signal, for example, a primary synchronization symbol and a secondary synchronization symbol), a reference symbol (which may be understood as a symbol for carrying a reference signal, for example, a demodulation reference signal and a channel state information reference signal), a control symbol (which may be understood as a symbol for carrying a control signal, for example, a physical downlink control channel symbol and a physical uplink control channel symbol), and the like. A symbol with a high importance level is used to provide a demodulation parameter (for example, a channel frequency response) of a data shared channel. This type of symbol has a high reliability requirement. For example, the reliability requirement reaches 99.9999%.

In other words, it may be understood that when the first symbol is the symbol with the high importance level, the length of the first sequence is long. Therefore, the first symbol is affected by small interference.

When the first symbol is a common symbol, for example, a data symbol, the first symbol has the specific anti-interference capability, and the length of the first sequence may be short. This reduces a spectral efficiency loss caused by the first sequence.

In this application, the transmission payload of the transmitted symbol may be understood as a quantity of information bits carried in the symbol sent by the first communication device in the first time unit.

For example, a shared channel may be a physical uplink shared channel (physical uplink shared channel, PUSCH), namely, a transmission payload of the PUSCH. Cost of introducing the first sequence into the first symbol is reduction of spectral efficiency or an increase of the code rate. A decrease degree of spectral efficiency or an increase degree of the code rate is related to the transmission payload of the PUSCH. A larger transmission load of the PUSCH indicates a lower decrease degree of spectral efficiency.

In other words, it may be understood that a smaller transmission payload of the transmitted symbol indicates a shorter length of the first sequence. This reduces the spectral efficiency loss caused by the first sequence.

For example, it is assumed that the first sequence is denoted as x*ₕ*, and x*ₕ* corresponds to transmitting ten modulation symbols. If the PUSCH has no x*ₕ*, a payload is 1000 modulation symbols, and x*ₕ* causes a 1% loss in frequency domain efficiency. If the PUSCH has no x*ₕ*, a payload is 100 modulation symbols, and x*ₕ* causes a 10% loss in frequency domain efficiency. Therefore, when the transmission payload of the transmitted symbol is small, the length of x*ₕ* should also be short.

In a second possible implementation, downlink transmission is used as an example. The first symbol is a downlink symbol.

The length of the first sequence is determined based on the length of the CP of the first symbol and the maximum delay spread of the first symbol. The length of the first sequence may satisfy Formula (4), that is, *xₕ + N*_{1*st uw,µ*} ≥ *MDS*₀*.*

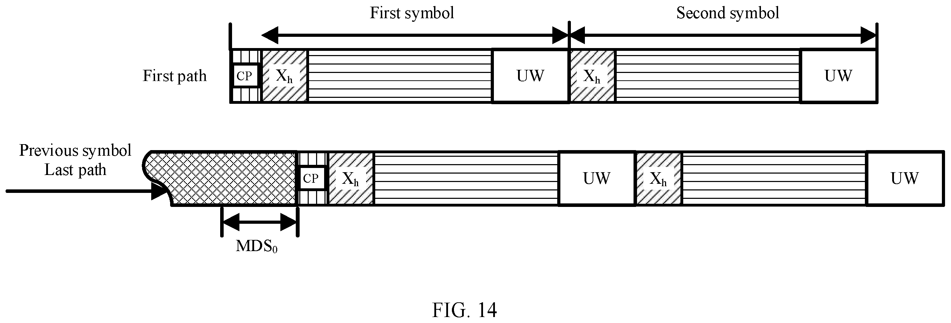

FIG. 14 is used as an example. The maximum delay spread experienced by the first symbol is *MDS*₀*.* If *xₕ + N*₁*_{st uw,µ} < MDS*₀, the first symbol is affected by ISI of a previous symbol, and circular convolution cannot be formed. The first communication device may determine the length of the first sequence based on Design 1, for example, the foregoing Formula (4). This can minimize impact of the ICI and the ISI on the first symbol.

Optionally, in the second possible implementation, the length of the first sequence is also determined based on at least one of the following: an MCS of the first symbol, an EVM required for the first symbol, a symbol type of the first symbol, or a transmission payload of the transmitted symbol. For details, refer to the descriptions of the first possible implementation. Details are not described again.

It should be supplemented that a configuration parameter of the first sequence may be indicated by first information. The first information is information sent by the network device to the terminal device, for example, the first information is carried in one of the following: downlink control information (downlink control information, DCI), a media access control-control element (medium access control-control element, MAC CE), a radio resource control (radio resource control, RRC) RRC message, or the like.

For example, if the first communication device is the network device, the network device performs the following operation: The network device sends the first information to the terminal device. Correspondingly, the terminal device receives the first information from the network device, and therefore the terminal device learns of the configuration parameter of the first sequence, and the terminal device demodulates the first symbol.

For another example, if the first communication device is the terminal device, the terminal device performs the following operations: The terminal device receives the first information from the network device, and therefore the terminal device learns of the configuration parameter of the first sequence, and further generates the first sequence that satisfies a configuration requirement of the network device.

The configuration parameter of the first sequence is described as follows.

Example 1: When all the first sequence is the UW (that is, the first sequence includes the first UW but does not include the service data), the configuration parameter of the first sequence includes a length parameter of the first sequence. Further, the configuration parameter of the first sequence further includes value information of the first sequence, for example, the value information indicates a value of the first UW of the first sequence.

Example 2: When the first sequence includes the first UW and the service data, the configuration parameter of the first sequence includes a length parameter of the first sequence and a length parameter of the first UW of the first sequence; or the configuration parameter of the first sequence includes a length parameter of the first UW of the first sequence and a length parameter of the service data of the first sequence.

In this way, if the first communication device is the network device, and a second communication device is the terminal device, the terminal device may learn of a start position of the service data of the first sequence based on the first information. This improves data demodulation performance of the terminal device.

If the first communication device is the network device, and the second communication device is the terminal device, based on the first information, the terminal device may learn of a start position of the service data of the first sequence, and further generate the first sequence that satisfies the configuration requirement of the network device.

For the first communication device, the first communication device performs S802 after generating the symbol in the first time unit.

S802: The first communication device sends the symbol in the first time unit to the second communication device. Correspondingly, the second communication device receives the symbol in the first time unit from the first communication device.

The second communication device is described as follows.

The method may be performed by the second communication device. Unless otherwise specified, the "second communication device" in this application may be the second communication device, may be a component (for example, a processor, a chip, or a chip system) in the second communication device, or may be a logic module or software that can implement all or some functions of the second communication device.

Uplink transmission is used as an example. The second communication device may be a network device.

Downlink transmission is used as an example. The second communication device may be a terminal device.

For the symbol in the first time unit, refer to the descriptions of S801. Details are not described again.

Optionally, the first information further includes position information of an FFT window, for example, a start position of the FFT window, an end position of the FFT window, and an FFT window size. The FFT window is used for demodulation of the first symbol. For the first information, refer to the descriptions of S801. Details are not described again.

If the second communication device is the terminal device, the terminal device may determine, based on the position information of the FFT window, the position of the FFT window, to receive and demodulate the symbol in the first time unit.

FIG. 9 is used as an example. The first sequence of the first symbol is the same as the third sequence of the second symbol. On a second communication device side, the FFT window may be denoted as an RX FFT window. A start position of the RX FFT window is adjacent to the end position of the first sequence, and an end position of the RX FFT window is the end position of the third sequence of the second symbol.

In other words, on the second communication device side, when the first symbol is demodulated, the RX FFT window is offset backward, and an offset is the length of the first sequence.

It should be supplemented that in the first possible implementation, when the first sequence of the first symbol is the same as the third sequence of the second symbol, the first symbol may be the symbol with the high importance level, for example, the synchronization symbol, the reference symbol, or the control symbol. This type of symbol is used to provide a data demodulation parameter, and helps reduce a data demodulation delay.

It should be supplemented that in the second possible implementation, that is, when the first sequence of the first symbol is the second UW, on a first communication device side, generation of the first symbol is irrelevant to the second symbol. This helps reduce processing complexity and a delay of the second symbol in a generation process. On the second communication device side, when the first symbol is demodulated, the RX FFT window does not need to be offset. To be specific, the start position of the FFT window is the start position of the first sequence, and the end position of the RX FFT window is the end position of the first symbol, as shown in FIG. 10.

It should be supplemented that in the communication method 800 in this embodiment of this application, on the first communication device side, the IFFT size is not changed when the first symbol is generated, and the first symbol and another symbol share an IFFT module. On the second communication device side, when all symbols are demodulated, a same quantity of FFT points is used for processing, that is, the same FFT module is used when all the symbols are demodulated.

It should be supplemented that in the communication method 800 in this embodiment of this application, the length of the first sequence may be configured based on a granularity 1, or may be configured based on another granularity. For example, the first sequence may be denoted as x*ₕ*, and the length of x*ₕ* may be *L* times of $\left⌊\frac{{MDS}_{0} - {N}_{1 st uw , μ}}{{L}_{0}}\right⌋$, or may be *L* times of $\left⌈\frac{{MDS}_{0} - {N}_{1 st uw , μ}}{{L}_{0}}\right⌉$, or may be *L* times of round ( $\frac{{MDS}_{0} - {N}_{1 st uw , μ}}{{L}_{0}}$). Herein, *N*_{1st uw,*µ*} represents the length of the CP of the first symbol, *MDS*₀ represents the maximum delay spread of the first symbol, *MDSₚᵣₑ* represents a maximum delay spread of the previous symbol of the first symbol, both *L*₀ and *L* are integers, and *L* ≤ *L*₀, *L* is related to the length *N*_{1st uw,*µ*} of the CP of the first symbol, the maximum delay spread *MDS*₀ of the first symbol, the maximum delay spread *MDSₚᵣₑ* of the previous symbol, the MCS/EVM of the first symbol, the symbol type, the transmission payload of the transmitted symbol, and the like, $\left⌊⋅\right⌋$ represents a rounding-down operator, $\left⌈⋅\right⌉$represents a rounding-up operator, and round(·)represents rounding off.

Optionally, when the configuration parameter of the first sequence includes the length parameter of the first sequence, the length parameter of the first sequence may be a length index.

For example, the first information may be carried in DCI, a MAC CE, or an RRC message. A specific quantity of bits in the foregoing signaling is used to carry the length parameter of the first sequence. For example, a bit sequence including 4 bits supports 16 lengths of the first sequence x*ₕ*. The first communication device and the second communication device may store a plurality of correspondences, and each correspondence indicates a length of a sequence and a length index, as shown in Table 6 or Table 7.

**Table 6**

| Bit sequence | Length index | Length of x*ₕ* |
|---|---|---|
| 000 | 0 | 0 |
| 001 | 1 | $\left⌊\frac{{MDS}_{0} - {N}_{1 st uw , μ}}{{L}_{0}}\right⌋$ |
| 010 | 2 | $2 \left⌊\frac{{MDS}_{0} - {N}_{1 st uw , μ}}{{L}_{0}}\right⌋$ |
| 011 | 3 | $3 \left⌊\frac{{MDS}_{0} - {N}_{1 st uw , μ}}{{L}_{0}}\right⌋$ |
| 100 | 4 | $4 \left⌊\frac{{MDS}_{0} - {N}_{1 st uw , μ}}{{L}_{0}}\right⌋$ |
| 101 | 5 | $5 \left⌊\frac{{MDS}_{0} - {N}_{1 st uw , μ}}{{L}_{0}}\right⌋$ |
| 110 | 6 | $6 \left⌊\frac{{MDS}_{0} - {N}_{1 st uw , μ}}{{L}_{0}}\right⌋$ |
| 111 | 7 | $7 \left⌊\frac{{MDS}_{0} - {N}_{1 st uw , μ}}{{L}_{0}}\right⌋$ |

For example, in Table 6, *L*₀ = 8, the bit sequence "000" corresponds to the length index 0 and corresponds to the length 0 of the first sequence x*ₕ*, the bit sequence "001" corresponds to the length index 1 and corresponds to the length $\left⌊\frac{{MDS}_{0} - {N}_{1 st uw , μ}}{{L}_{0}}\right⌋$ of the first sequence x*ₕ*, and the bit sequence "111" corresponds to the length index 7 and corresponds to the length $7 \left⌊\frac{{MDS}_{0} - {N}_{1 st uw , μ}}{{L}_{0}}\right⌋$ of the first sequence x*ₕ*.

**Table 7**

| Bit sequence | Length index | Length of x*ₕ* |
|---|---|---|
| 000 | 0 | $\left⌊\frac{{MDS}_{0} - {N}_{1 st uw , μ}}{{L}_{0}}\right⌋$ |
| 001 | 1 | $2 \left⌊\frac{{MDS}_{0} - {N}_{1 st uw , μ}}{{L}_{0}}\right⌋$ |
| 010 | 2 | $3 \left⌊\frac{{MDS}_{0} - {N}_{1 st uw , μ}}{{L}_{0}}\right⌋$ |
| 011 | 3 | $4 \left⌊\frac{{MDS}_{0} - {N}_{1 st uw , μ}}{{L}_{0}}\right⌋$ |
| 100 | 4 | $5 \left⌊\frac{{MDS}_{0} - {N}_{1 st uw , μ}}{{L}_{0}}\right⌋$ |
| 101 | 5 | $6 \left⌊\frac{{MDS}_{0} - {N}_{1 st uw , μ}}{{L}_{0}}\right⌋$ |
| 110 | 6 | $7 \left⌊\frac{{MDS}_{0} - {N}_{1 st uw , μ}}{{L}_{0}}\right⌋$ |
| 111 | 7 | $8 \left⌊\frac{{MDS}_{0} - {N}_{1 st uw , μ}}{{L}_{0}}\right⌋$ |

For example, in Table 7, *L*₀ = 8, the bit sequence "000" corresponds to the length index 0 and corresponds to the length $\left⌊\frac{{MDS}_{0} - {N}_{1 st uw , μ}}{{L}_{0}}\right⌋$ of the first sequence x*ₕ*, the bit sequence "001" corresponds to the length index 1 and corresponds to the length $\left⌊\frac{{MDS}_{0} - {N}_{1 st uw , μ}}{{L}_{0}}\right⌋$ of the first sequence x*ₕ*, and the bit sequence "111" corresponds to the length index 7 and corresponds to the length $8 \left⌊\frac{{MDS}_{0} - {N}_{1 st uw , μ}}{{L}_{0}}\right⌋$ of the first sequence x*ₕ*.

It should be understood that Table 6 and Table 7 each describe correspondences among the bit sequence, the length index, and the length of the first sequence x*ₕ*. Certainly, there is actually another correspondence. This is not limited herein.

A first communication device generates a symbol in a first time unit, where a first symbol is a 1^{st} symbol in the first time unit, and the first symbol includes a CP, a fifth sequence, and a sixth sequence; a start position of the CP of the first symbol is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit includes a seventh sequence, and an end position of the seventh sequence is adjacent to the start position of the CP of the first symbol; and the fifth sequence is the same as the seventh sequence, and the sixth sequence is the same as the CP of the first symbol; and the first communication device sends the symbol in the first time unit.

In this way, for the 1^{st} symbol (namely, the first symbol) in the first time unit, a tail of the symbol includes two parts, namely, the fifth sequence and the sixth sequence. The fifth sequence is the same as the seventh sequence, and the sixth sequence is the same as the CP of the first symbol, and therefore the seventh sequence (namely, an end sequence of a previous symbol) and the CP of the first symbol may be considered as an equivalent CP of the first symbol. In other words, in correspondence with that the first symbol includes the CP, the seventh sequence can be equivalent to extending the CP. This helps better reduce ISI and ICI and improve demodulation performance.

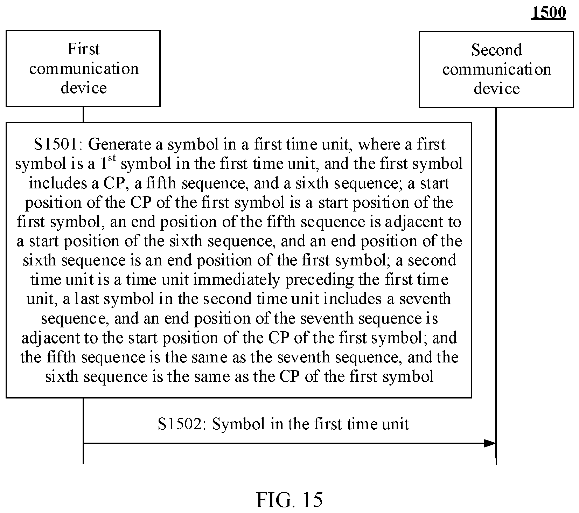

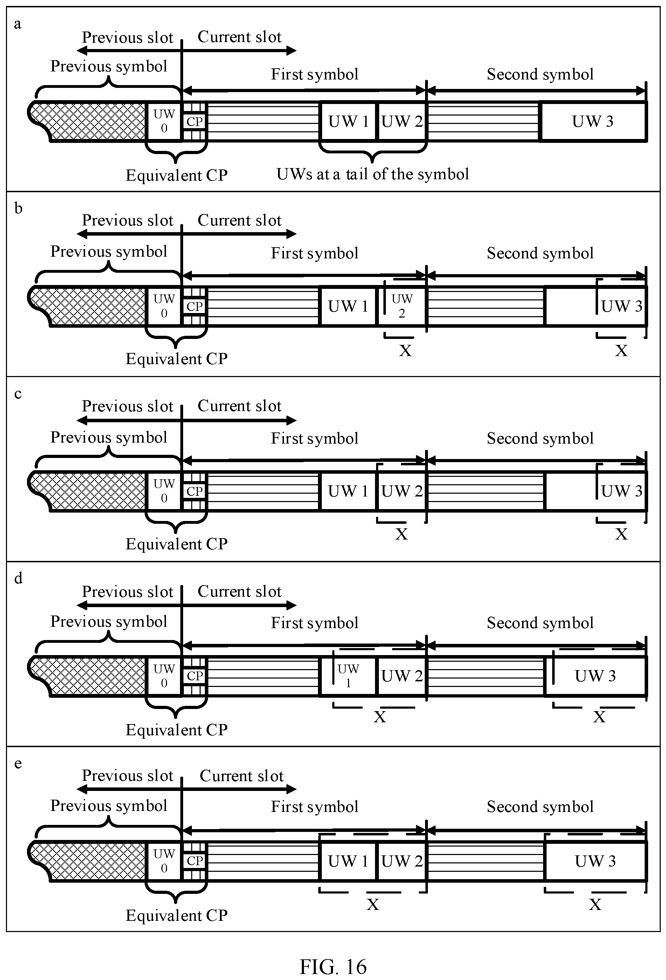

With reference to FIG. 15 and FIG. 16, the following describes in detail a communication method according to an embodiment of this application. The communication method 1500 according to this embodiment of this application includes the following steps.

S1501: A first communication device generates a symbol in a first time unit.

For the first communication device and the first time unit, refer to the descriptions of S801. Details are not described again.

The symbol in the first time unit is described as follows.

A 1^{st} symbol, namely, the first symbol, in the first time unit is described as follows.

The first symbol includes a CP, a fifth sequence, and a sixth sequence.

In a first aspect, positions of the CP, the fifth sequence, and the sixth sequence of the first symbol are described as follows:

A start position of the CP of the first symbol is a start position of the first symbol, an end position of the fifth sequence is adjacent to a start position of the sixth sequence, and an end position of the sixth sequence is an end position of the first symbol.

FIG. 16 is used as an example. A first time unit may be the current slot. A CP of a first symbol is shown by a vertical line filled grid with a CP, a fifth sequence is shown by a non-filled grid with a UW 1, and a sixth sequence is shown by a non-filled grid with a UW 2.

In a second aspect, content of the fifth sequence and the sixth sequence is described as follows:

A second time unit is a time unit immediately preceding the first time unit, a last symbol in the second time unit includes a seventh sequence, and an end position of the seventh sequence is adjacent to the start position of the CP. The fifth sequence is the same as the seventh sequence, and the sixth sequence is the same as the CP.

FIG. 16 is used as an example. A second time unit may be a previous slot of the current slot. A last symbol in the second time unit is a previous symbol in FIG. 16. The seventh sequence is shown by a non-filled grid with a UW.

In FIG. 16, "WU 0=UW 1" and "CP=WU 2". "WU 0=UW 1" means that the UW 0 (namely, the seventh sequence) at a tail of the previous symbol is the same as the UW 1 (namely, the fifth sequence) of the first symbol. "CP=WU 2" means that the CP of the first symbol is the same as the UW 2 (namely, the sixth sequence) of the first symbol.

In this way, a tail UW (namely, the seventh sequence) of the previous symbol and the CP of the first symbol may be considered as an equivalent CP of the first symbol. This is equivalent to extending a length of the CP of the first symbol.

Optionally, the first time unit further includes a second symbol. The second symbol is a symbol immediately following the first symbol, the second symbol includes an eighth sequence, and an end position of the eighth sequence is an end position of the second symbol. At least a part of the eighth sequence is the same as at least a part of a ninth sequence, and the ninth sequence includes the fifth sequence and the sixth sequence.

FIG. 16 is used as an example. An eighth sequence may be shown by a non-filled grid with a UW 3.

It should be noted that at least the part of the eighth sequence is the same as at least the part of the ninth sequence may be understood as that a signal with a length of x at a tail of the eighth sequence is the same as a signal with a length of x at a tail of the ninth sequence, where x is a positive integer. An end position of the ninth sequence is the end position of the sixth sequence.

FIG. 16 is used as an example. In a box with a letter b, c, or d, as shown by dashed-line boxes, a value of x is less than a length of the eighth sequence, and a value of x is less than a length of a ninth sequence. This means that a part of the eighth sequence is the same as a part of the ninth sequence.

Further, FIG. 16 is used as an example. In the box with the letter b, as shown by one dashed-line box, the sixth sequence is a part of the ninth sequence, and the value of x is further less than a length of the sixth sequence. This means that a part of the eighth sequence is the same as a part of the sixth sequence.

FIG. 16 is used as an example. In the box with the letter c, as shown by one dashed-line box, the sixth sequence is a part of the ninth sequence, and the value of x is further equal to a length of the sixth sequence. This means that a part of the eighth sequence is the same as all of the sixth sequence.

FIG. 16 is used as an example. In the box with the letter d, as shown by one dashed-line box, the fifth sequence and the sixth sequence are different parts of the ninth sequence, and the value of x is further greater than a length of the sixth sequence. This means that a part of the eighth sequence is the same as all of the sixth sequence and a part of the fifth sequence.

FIG. 16 is used as an example. In the box with the letter e, as shown by the dashed-line boxes, the value of x is equal to a length of the eighth sequence, and the value of x is equal to a length of the ninth sequence. This means that all of the eighth sequence is the same as all of the ninth sequence.

It is easy to understand that as shown in FIG. 16, the ninth sequence and the eighth sequence are UWs. It may be understood that the ninth sequence at a tail of the first symbol is UWs (that is, the fifth sequence is the UW, and the sixth sequence is the UW), and is used as an equivalent CP of the second symbol. Similarly, the eighth sequence at a tail of the second symbol is a UW, and is used as an equivalent CP of a next symbol of the second symbol.

Optionally, a precoding scheme of the first symbol is the same as a precoding scheme of the last symbol in the second time unit; or the first symbol and the last symbol in the second time unit are not precoded.

In this way, the fifth sequence at the tail of the first symbol may be the same as the seventh sequence at the tail of the last symbol.

For the first communication device, the first communication device performs S1502 after generating the symbol in the first time unit.

S1502: The first communication device sends the symbol in the first time unit to a second communication device. Correspondingly, the second communication device receives the symbol in the first time unit from the first communication device.

For an implementation process of S1502, refer to the descriptions of S802. Details are not described again.

It should be supplemented that in the communication method 1500 in this embodiment of this application, the first time unit and the second time unit may be time units sent to a same device (namely, the second communication device), or may be time units sent to different devices. This is not limited in this application.

It should be supplemented that in the communication method 1500 in this embodiment of this application, when the first symbol is demodulated on a second communication device side, an RX FFT window does not need to be offset, that is, a start position of the RX FFT window is adjacent to the end position of the CP of the first symbol, and an end position of the RX FFT window is the end position of the first symbol.

It should be supplemented that in the communication method 1500 in this embodiment of this application, the first communication device is a network device, and the second communication device is a terminal device. This means that the communication method 1500 in this embodiment of this application is applicable to downlink transmission, for example, a downlink time division multiplexing scenario.

A first communication device generates a symbol in a first time unit, where a first symbol is a 1^{st} symbol in the first time unit, the first symbol includes a CP, a tenth sequence, an eleventh sequence, a twelfth sequence, and a thirteenth sequence, a start position of the CP of the first symbol is a start position of the first symbol, and a start position of the tenth sequence is adjacent to an end position of the CP; an end position of the eleventh sequence is adjacent to a start position of the twelfth sequence, an end position of the twelfth sequence is adjacent to a start position of the thirteenth sequence, and an end position of the thirteenth sequence is an end position of the first symbol; and the CP of the first symbol is the same as the eleventh sequence, and the tenth sequence is the same as the twelfth sequence; and the first communication device sends the symbol in the first time unit.

In this way, for the 1^{st} symbol (namely, the first symbol) in the first time unit, a head of the symbol includes two parts: the CP of the first symbol and the tenth sequence. The CP of the first symbol is the same as the eleventh sequence, and the tenth sequence is the same as the twelfth sequence, and therefore the CP of the first symbol and the tenth sequence may be considered as an equivalent CP of a middle segment signal in the first symbol. In correspondence with that the first symbol includes the CP, the tenth sequence can be equivalent to extending the CP. This helps better reduce impact of ISI and ICI and improve demodulation performance.

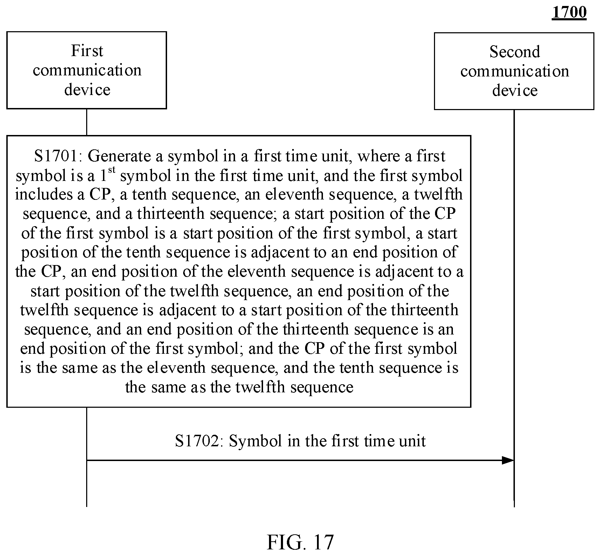

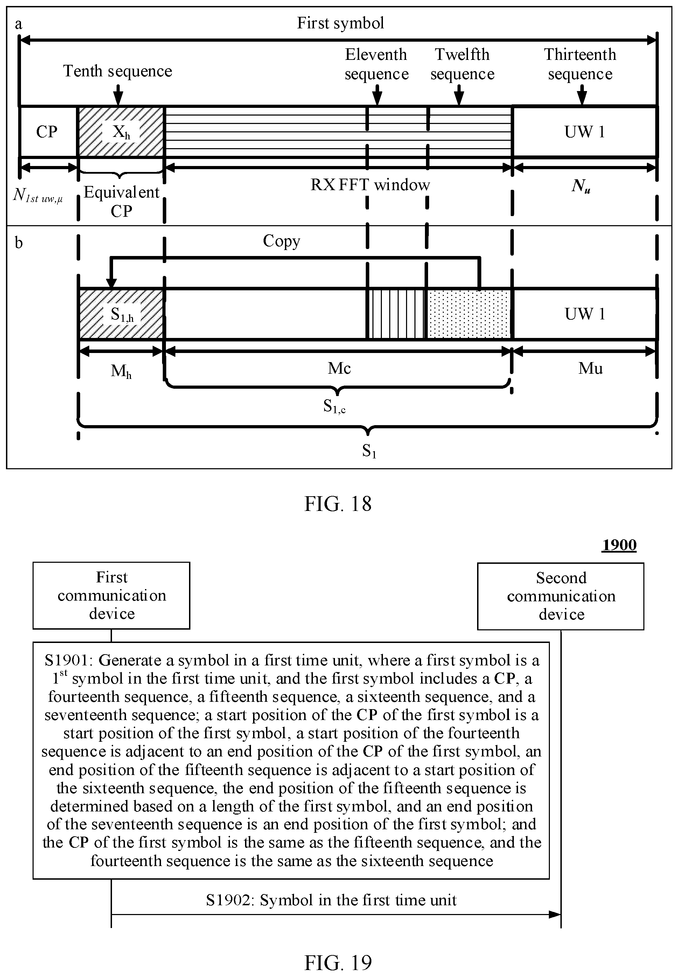

With reference to FIG. 17 and FIG. 18, the following describes in detail a communication method according to an embodiment of this application. The communication method 1700 according to this embodiment of this application includes the following steps.

S1701: A first communication device generates a symbol in a first time unit.

For the first communication device and the first time unit, refer to the descriptions of S801. Details are not described again.

The symbol in the first time unit is described as follows.

A 1^{st} symbol, namely, the first symbol, in the first time unit is described as follows.

The first symbol includes a CP, a tenth sequence, an eleventh sequence, a twelfth sequence, and a thirteenth sequence.

In a first aspect, positions of the CP, the tenth sequence, the eleventh sequence, the twelfth sequence, and the thirteenth sequence of the first symbol are described as follows.

A start position of the CP of the first symbol is a start position of the first symbol, and a start position of the tenth sequence is adjacent to an end position of the CP of the first symbol; and an end position of the eleventh sequence is adjacent to a start position of the twelfth sequence, an end position of the twelfth sequence is adjacent to a start position of the thirteenth sequence, and an end position of the thirteenth sequence is an end position of the first symbol, as shown in FIG. 18.

In a second aspect, content of the tenth sequence, the eleventh sequence, the twelfth sequence, and the thirteenth sequence is described as follows.

The CP of the first symbol is the same as the eleventh sequence, and the tenth sequence is the same as the twelfth sequence. For example, the tenth sequence includes first part service data, the eleventh sequence includes second part of service data, and the thirteenth sequence is a UW.

In this way, the CP of the first symbol and the tenth sequence can be considered as an equivalent CP of a middle segment signal x*_{c}* of the first symbol. This is equivalent to extending a length of the CP.

Herein, a length of the middle segment signal x*_{c}* is equal to a length of the first symbol minus (a length of the CP of the first symbol+a length of the tenth sequence+a length of the thirteenth sequence). A start position of the middle segment signal x*_{c}* is adjacent to an end position of the tenth sequence. An end position of the middle segment signal x*_{c}* is adjacent to the start position of the thirteenth sequence.

FIG. 18 is used as an example. In a box with a letter a, the middle segment signal x*_{c}* is a horizontal line filled part of the first symbol in FIG. 18.

In addition, the CP (namely, the CP with the length of *N*_{1st uw,*µ*}) of the first symbol is no longer equal to a signal with a length of *N*_{1st uw,*µ*} at a tail of the first symbol, but is equal to a signal with a length of *N*_{1st uw,*µ*} at a tail of the middle segment signal x*_{c}*.

Next, a process of generating the tenth sequence x*ₕ* is described.

To facilitate explanation, some variables are defined first. It is assumed that the first symbol includes *N* sampling values, the length of the tail UW (namely, the thirteenth sequence) is *Nᵤ,* a length of the tenth sequence x*ₕ* is *Nₓₕ,* and an upsampling factor is *P.* In DFT-s-OFDM modulation, the upsampling factor is *P = N*/*M*, where *M* is a DFT size.

A modulation input corresponding to the first symbol is denoted as s₁, and a length of s₁ is *M̃ = N*/*P* (for DFT-s-OFDM modulation, *M̃ = M* )*.* In other words, DFT-s-OFDM modulation or time domain linear convolution SC modulation is performed on s₁, to generate the first symbol. It can be learned from a sampling relationship that, in the first symbol, the tail UW (namely, the thirteenth sequence) with the length of *Nᵤ* corresponds to ${M}_{u} = \left⌈{N}_{u}/P\right⌉$ tail sampling values of s₁. The tenth sequence x*ₕ* corresponds to ${M}_{h} = \left⌈{N}_{xh}/P\right⌉$ head sampling values of s₁, and is represented by using a vector s_{1,*h*} with a length of *Mₕ.* Therefore, the middle signal x*_{c}* with the length of (*N - Nᵤ - Nₓₕ*) corresponds to *M_{c} =* (*M̃ - Mᵤ - Mₕ*) middle sampling values of s₁, and is represented by using a vector s_{1,*c*} = [*s*_{1,*c*}(0)*, s*_{1*,c*}(1), ··· *, s*_{1,*c*}(*M_{c}* - 1)] with a length of *M_{c}.* In addition, ${M}_{CP} = \left⌈{N}_{1 st uw , μ}/P\right⌉$ is defined.

After the foregoing definitions are completed, let ${s}_{1 , h} = \left[{s}_{1 , c}\left[{M}_{c}-{M}_{h}\right],{s}_{1 , c}\left[{M}_{c}-{M}_{h}+1\right],⋯,{s}_{1 , c}\left[{M}_{c}-1\right]\right]$

FIG. 18 is used as an example. In a box with a letter b, s_{1,*h*} may also be understood as copy of a segment of signal of s_{1,*c*}.

For time domain linear convolution SC modulation, s_{1,*h*} is modulated and then x*ₕ* is generated, and s_{1,*c*} is modulated and then the middle segment signal x*_{c}* is generated. x*_{c}* may be split into three sub-signals, that is, x*_{c}* = [x_{*c*,1}, x_{*c*,2}, x_{*c*,3}], where a length of x_{*c*,2} is *N*_{1st uw,*µ*}, and a length of x_{*c*,3} is *Nₓₕ.* Because of Formula (8), x*ₕ* is equal to x_{*c*,3}. In addition, the CP is equal to x_{*c*,2}. Therefore, x*ₕ* associating with the CP may be used as the equivalent CP of x*_{c}*.

For DFT-s-OFDM modulation, DFT-s-OFDM modulation is performed on s_{1,*h*} and then the signal x̃*ₕ* with the length of *Nₓₕ* is generated, and *s*_{1,*c*} is modulated and then the middle segment signal x*_{c}* is generated. x*_{c}* may be split into three sub-signals, that is, x*_{c}* = [*x*_{*c,*1}*,* x_{*c*,2}, x_{*c*,3}], where a length of x_{*c*,2} is *N*_{1st uw,*µ*}, and a length of x_{*c*,3} is *Nₓₕ.* When a subcarrier occupied by s₁ does not start from a zero carrier (or a first subcarrier in N subcarriers), x̃*ₕ* is not equal to x_{*c*,3}, and there is a phase difference between the two, that is, ${x}_{c , 3} = {{x}^{˜}}_{h} {e}^{j 2 {πm}_{0} \frac{\left(N-{N}_{u}-{N}_{xh}\right)}{N}}$

Herein, *m*₀ represents an index (ranging from 0 to *N* - 1) of the first subcarrier occupied by s₁. Therefore, after DFT-s-OFDM modulation is performed, phase compensation further needs to be performed on *x̃ₕ* to obtain ${x}_{h} = {{x}^{˜}}_{h} {e}^{j 2 {πm}_{0} \frac{\left(N-{N}_{u}-{N}_{xh}\right)}{N}}$

Finally, x_{*c*,2} in x*_{c}* is copied to the front of the first symbol as the CP.

In conclusion, steps of generating the first symbol and the CP at the front of the first symbol are as follows.

Step 1: Obtain the vector s_{1,*c*} with the length of *M_{c}* and a UW sequence with a length of *Mᵤ*.

Step 2: Generate s_{1,*h*} according to Formula (8).

Step 3: Assemble s_{1,*h*}, s_{1,*c*}, and the UW sequence with the length of *Mᵤ* into a vector s₁ with a length of *M̃* based on the box with the letter b in FIG. 18.

Step 4: Modulate s₁ to obtain a vector with a length of *N*; and for DFT-s-OFDM modulation, perform phase compensation on *x̃ₕ* according to Formula (10) after modulation to obtain x*ₕ*, so as to obtain the first symbol.

Step 5: Copy the *N*_{1st uw,*µ*} sampling values included in x_{*c*,2} to the front of the first symbol as the CP.

It should be noted that in a first implementation, a length of the first sequence is determined based on a length of the CP of the first symbol and a maximum delay spread of the first symbol. Further, the length of the first sequence is further determined based on at least one of the following: an MCS of the first symbol, an EVM required for the first symbol, a symbol type of the first symbol, or a transmission payload of the transmitted symbol. The sent symbol may be understood as a symbol sent by the first communication device in the first time unit. For a process of determining the length of the first sequence, refer to the descriptions of the communication method 800. Details are not described again.

For the first communication device, the first communication device performs S1702 after generating the symbol in the first time unit.

S1702: The first communication device sends the symbol in the first time unit to a second communication device. Correspondingly, the second communication device receives the symbol in the first time unit from the first communication device.

For an implementation process of S1702, refer to the descriptions of S802. Details are not described again.

Optionally, when the second communication device is a terminal device, the terminal device further receives first information from a network device. The first information includes position information of an FFT window, and the FFT window is used for demodulation of the first symbol. For the first information, refer to the descriptions of the communication method 800.

FIG. 18 is used as an example. In the box with the letter a, an FFT window size is equal to the length of the middle segment signal x*_{c}*. On a second communication device side, the FFT window may be denoted as an RX FFT window. A start position of the RX FFT window is adjacent to the end position of the tenth sequence, and an end position of the FFT window is the end position of the twelfth sequence.

A first communication device generates a symbol in a first time unit, where the first symbol is a 1^{st} symbol in the first time unit, the first symbol includes a CP, a fourteenth sequence, a fifteenth sequence, a sixteenth sequence, and a seventeenth sequence, a start position of the CP of the first symbol is a start position of the first symbol, and a start position of the fourteenth sequence is adjacent to an end position of the CP of the first symbol; an end position of the fifteenth sequence is adjacent to a start position of the sixteenth sequence, and the end position of the fifteenth sequence is determined based on a length of the first symbol; an end position of the seventeenth sequence is an end position of the first symbol; and the CP of the first symbol is the same as the fifteenth sequence, and the fourteenth sequence is the same as the sixteenth sequence; and the first communication device sends the symbol in the first time unit.

In this way, for the 1^{st} symbol (namely, the first symbol) in the first time unit, a head of the symbol includes two parts: the CP of the first symbol and the fourteenth sequence. The CP of the first symbol is the same as the fifteenth sequence, and the fourteenth sequence is the same as the sixteenth sequence, and therefore the CP of the first symbol and the fourteenth sequence may be considered as an equivalent CP of a middle segment signal in the first symbol. In correspondence with that the first symbol includes the CP, the fourteenth sequence can be equivalent to extending the CP. This helps better reduce impact of ISI and ICI and improve demodulation performance.

With reference to FIG. 19 to FIG. 21, the following describes in detail a communication method according to an embodiment of this application. The communication method 1900 according to this embodiment of this application includes the following steps.

S1901: A first communication device generates a symbol in a first time unit.

For the first communication device and the first time unit, refer to the descriptions of S801. Details are not described again.

The symbol in the first time unit is described as follows.

A 1^{st} symbol, namely, the first symbol, in the first time unit is described as follows.

The first symbol includes a CP, a fourteenth sequence, a fifteenth sequence, a sixteenth sequence, and a seventeenth sequence.

In a first aspect, positions of the CP, the fourteenth sequence, the fifteenth sequence, the sixteenth sequence, and the seventeenth sequence of the first symbol are described as follows.

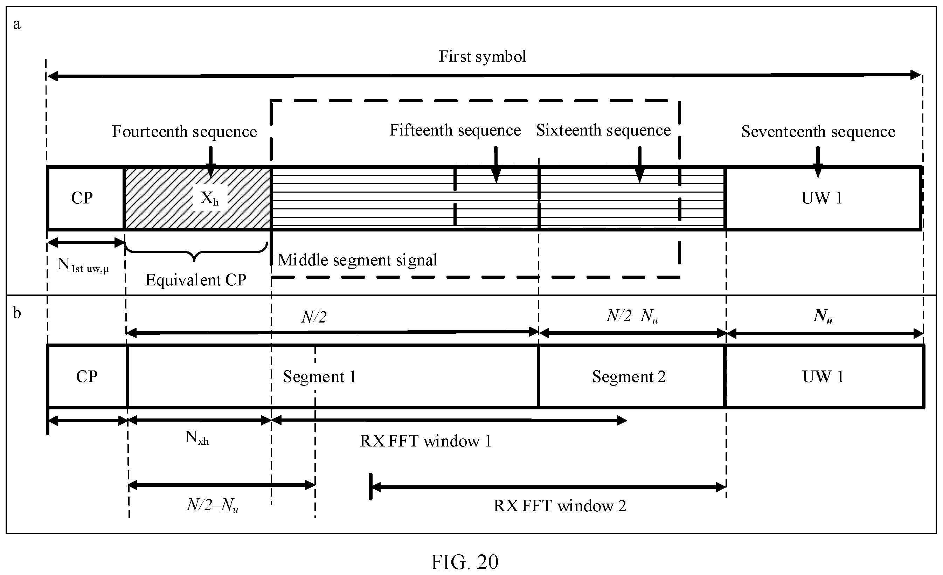

A start position of the CP of the first symbol is a start position of the first symbol, and a start position of the fourteenth sequence is adjacent to an end position of the CP of the first symbol. An end position of the fifteenth sequence is adjacent to a start position of the sixteenth sequence, and the end position of the fifteenth sequence is determined based on a length of the first symbol. An end position of the seventeenth sequence is an end position of the first symbol, as shown in FIG. 20.

It should be supplemented that the end position of the fifteenth sequence is determined based on the length of the first symbol may be understood as that the first symbol includes N values, a first value in the N values is adjacent to the end position of the CP of the first symbol, and a last value in the N values is adjacent to a start position of the seventeenth sequence. The fifteenth sequence includes N/2 values in the N values. In other words, a length of the first symbol other than the CP is N. A length of the fifteenth sequence is N/2.

In a second aspect, content of the fourteenth sequence, the fifteenth sequence, the sixteenth sequence, and the seventeenth sequence is described as follows.

The CP of the first symbol is the same as the fifteenth sequence, and the fourteenth sequence is the same as the sixteenth sequence. For example, the fourteenth sequence includes first part service data, the fifteenth sequence includes second part service data, and the seventeenth sequence is a UW.

In this way, the CP of the first symbol and the fourteenth sequence can be considered as an equivalent CP of a middle segment signal x*_{c}* of the first symbol, and the fourteenth sequence is equivalent to extending a length of the CP.

A start position of the middle segment signal x*_{c}* is adjacent to an end position of the fourteenth sequence. An end position of the middle segment signal x*_{c}* is an end position of the sixteenth sequence.

FIG. 20 is used as an example. In a box with a letter a, the middle segment signal x*_{c}* is a part shown in a dashed-line box in FIG. 20.

In addition, in FIG. 20, a box with the 'middle segment signal' shows the middle segment signal, that is, a length between the start position of the middle segment signal and the end position of the CP of the first symbol is *Nₓₕ.* A length of the fourteenth sequence is *Nₓₕ.*

The following describes a process of generating the fourteenth sequence x*ₕ*.

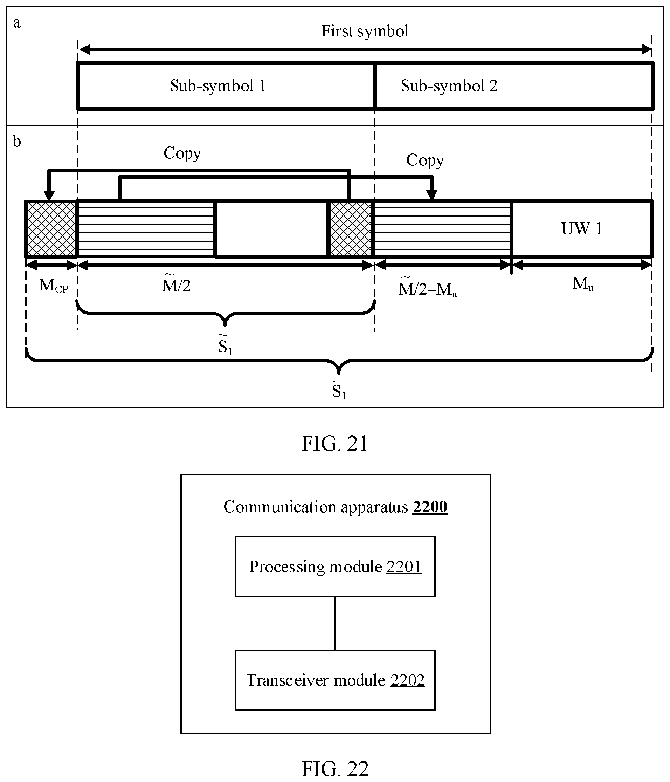

For ease of description, as shown in FIG. 20 or FIG. 21, the following features are first defined.
1. The seventeenth sequence, namely, the tail UW, with a length of *Nᵤ,* of the first symbol, is used as an equivalent CP of a second symbol, where the second symbol is a symbol immediately following the first symbol.
2. A length of a segment 1 is *N*/*2,* a length of a segment 2 is *N*/*2 - Nᵤ, and N* is the length of the first symbol other than the CP.
3. First *N*/*2 - Nᵤ* sampling values of both the segment 2 and the segment 1 are equal.
4. The CP with a length of *N*_{1st uw,*µ*} is equal to last *N*_{1st uw,*µ*} sampling values of the segment 1, where the last *N*_{1st uw,*µ*} sampling values of the segment 1 form the fifteenth sequence.

FIG. 21 is used as an example. If the first symbol is a DFT-s-OFDM symbol or an OFDM symbol, the first communication device may perform the following steps.

Step 1: Obtain a time domain vector s̃₁ with a length of *M*/*2.*

Step 2: Perform *M*/2-point DFT processing to obtain a frequency domain vector S̃₁ with a length of *M*/2.

Step 3: Map S̃₁ to *M*/2 subcarriers in *N* subcarriers at an interval of 2, starting from a subcarrier whose index is an even number (for example, 0).

Step 4: Perform *N*-point IFFT processing to obtain an *N*-point time domain vector.

Step 3 is performed, and the *N*-point time domain vector may be enabled to be split into two same sub-symbols (denoted as a sub-symbol 1 and a sub-symbol 2) with a length of *N*/2*,* where the sub-symbol 1 in FIG. 21 is equal to the segment 1 in FIG. 20.

Step 5: Perform CP addition.

Step 6: Replace last *Nᵤ* sampling values of the sub-symbol 2 with a tail UW of the first symbol, where a part that is not replaced in the sub-symbol 2 in FIG. 21 is equal to the segment 2 in FIG. 20.

If the first symbol is a time domain linear SC modulation symbol, the first communication device may perform the following steps.

Step 1: Obtain a time domain vector s̃₁ with a length of *M̃*/2 and a UW sequence including ${M}_{u} = \left⌈{N}_{u}/P\right⌉$ sampling values, where *M̃* = *N*/*P, P* is an upsampling factor, and *Nᵤ* is the length of the tail UW of the first symbol.

Step 2: Generate a time domain vector ṡ₁ with a length of (*M̃ + M_{CP}*) based on the time domain vector s̃₁ with the length of *M̃*/2 and the UW sequence including ${M}_{u} = \left⌈{N}_{u}/P\right⌉$ sampling values, where ${M}_{CP} = \left⌈{N}_{1 st uw , μ}/P\right⌉$.

Step 3: Perform time domain linear SC modulation on ṡ₁ to generate the first symbol, where the first symbol includes the CP with the length of *N*_{1st uw,*µ*}.

For the first communication device, the first communication device performs S1902 after generating the symbol in the first time unit.

S1902: The first communication device sends the symbol in the first time unit to a second communication device. Correspondingly, the second communication device receives the symbol in the first time unit from the first communication device.

For an implementation process of S1902, refer to the descriptions of S802. Details are not described again.

Optionally, when the second communication device is a terminal device, the terminal device further receives first information from a network device. The first information includes position information of an FFT window, and the FFT window is used for demodulation of the first symbol. For the first information, refer to the descriptions of the communication method 800.

FIG. 20 is used as an example. In a box with a letter b, an FFT window size is equal to N/2, were N represents the length of the first symbol other than the CP. On a second communication device side, the FFT window may be denoted as an RX FFT window. In an example, a start position of the RX FFT window and the end position of the CP of the first symbol are offset by a specific offset, namely, the length of the fourteenth sequence *Nₓₕ,* as shown by an RX FFT window 1. In another example, an end position of the RX FFT window is an end position of the segment 2, as shown by an RX FFT window 2.

It should be noted that in this application, descriptions of 'adjacent' are as follows.

That an end position of a sequence A is adjacent to a start position of a sequence B may be understood as that a previous sampling value of a 1st sampling value of the sequence B is a last sampling value of the sequence A. To be specific, the start position of the sequence B is a next position after the end position of the sequence A. In other words, 'adjacent' in this application may be understood as directly adjacent.

In this application, descriptions of 'same' are as follows.

That a sequence A is the same as a sequence B may be understood as that if the sequence A and the sequence B are sequences obtained before DFT-s-OFDM modulation (or SC modulation), the sequence A is the same as the sequence B. If the sequence A and the sequence B are sequences obtained after DFT-s-OFDM modulation (or SC modulation), 'a modulation input signal used to generate the sequence A' is the same as 'a modulation input signal used to generate the sequence B'.

It is easy to understand that in a DFT-s-OFDM modulation (or SC modulation) process, a modulation output signal is circular or linear convolution of a modulation input signal and pulse shaping. Even if signals of two modulation input signals are the same at some positions (denoted as C), signals of the two modulation input signals are different at other positions (denoted as D), and therefore two modulation output signals may be different at positions C.

That the sequence A is approximately the same as the sequence B may be understood as that the sequence A and the sequence B are some sequences in modulation signals generated after DFT-s-OFDM modulation (or SC modulation), and a difference between the sequence A and the sequence B is caused by DFT-s-OFDM modulation (or the SC modulation).

It may be understood that in the foregoing embodiments, the methods and/or steps implemented by the first communication device may also be implemented by a component (for example, a processor, a chip, a chip system, a circuit, a logic module, or software) that can be used in the first communication device. The methods and/or steps implemented by the second communication device may alternatively be implemented by a component (for example, a processor, a chip, a chip system, a circuit, a logic module, or software) that can be used in the second communication device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely a logical function division. In actual implementation, another division manner may be used.

FIG. 22 is a diagram of a structure of a communication apparatus 2200. The communication apparatus 2200 includes a processing module 2201 and a transceiver module 2202. The communication apparatus 220 may be configured to implement a function of the first communication device or the second communication device.

In some embodiments, the communication apparatus 220 may further include a storage module (not shown in FIG. 22), configured to store program instructions and data.

In some embodiments, the transceiver module 2202 may also be referred to as a transceiver unit, and is configured to implement a sending function and/or a receiving function. The transceiver module 2202 may include a transceiver circuit, a transceiver machine, a transceiver, or a communication interface.

In some embodiments, the transceiver module 2202 may include a receiving module and a sending module respectively configured to perform receiving and sending type steps performed by the first communication device or the second communication device in the foregoing method embodiments, and/or configured to support another process of the technology described in this specification. The processing module 2201 may be configured to perform processing (for example, determining) type steps performed by the first communication device or the second communication device in the foregoing method embodiments, and/or configured to support another process of the technology described in this specification.

When the communication apparatus 2200 is configured to implement the function of the first communication device,
the processing module 2201 is configured to generate a symbol in a first time unit, where a first symbol is a 1^{st} symbol in the first time unit, and the first symbol includes a first sequence and a second sequence; in correspondence with that the first symbol does not include a cyclic prefix CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol; and
the transceiver module 2202 is configured to send the symbol in the first time unit.

When the communication apparatus 2200 is configured to implement the function of the second communication device,
the transceiver module 2202 is configured to receive a symbol in a first time unit, where a first symbol is a 1^{st} symbol in the first time unit, and the first symbol includes a first sequence and a second sequence; in correspondence with that the first symbol does not include a cyclic prefix CP, a start position of the first sequence is a start position of the first symbol; in correspondence with that the first symbol includes a CP, a start position of the first sequence is adjacent to an end position of the CP of the first symbol; and an end position of the second sequence is an end position of the first symbol.

When the communication apparatus 2200 is configured to implement the function of the first communication device,
the processing module 2201 is configured to generate a symbol in a first time unit, where a first symbol is a 1^{st} symbol in the first time unit, and the first symbol includes a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit includes a seventh sequence, and an end position of the seventh sequence is adjacent to the start position of the CP; and the fifth sequence is the same as the seventh sequence, and the sixth sequence is the same as the CP; and
the transceiver module 2202 is configured to send the symbol in the first time unit.

When the communication apparatus 2200 is configured to implement the function of the second communication device,
the transceiver module 2202 is configured to receive a symbol in a first time unit, where a first symbol is a 1^{st} symbol in the first time unit, and the first symbol includes a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit includes a seventh sequence, and an end position of the seventh sequence is adjacent to the start position of the CP; and the fifth sequence is the same as the seventh sequence, and the sixth sequence is the same as the CP.

When the communication apparatus 2200 is configured to implement the function of the first communication device,
the processing module 2201 is configured to generate a symbol in a first time unit, where a first symbol is a 1^{st} symbol in the first time unit, and the first symbol includes a cyclic prefix CP, a tenth sequence, an eleventh sequence, a twelfth sequence, and a thirteenth sequence; a start position of the CP is a start position of the first symbol, a start position of the tenth sequence is adjacent to an end position of the CP, an end position of the eleventh sequence is adjacent to a start position of the twelfth sequence, an end position of the twelfth sequence is adjacent to a start position of the thirteenth sequence, and an end position of the thirteenth sequence is an end position of the first symbol; and the CP is the same as the eleventh sequence, and the tenth sequence is the same as the twelfth sequence; and
the transceiver module 2202 is configured to send the symbol in the first time unit.

When the communication apparatus 2200 is configured to implement the function of the second communication device,
the transceiver module 2202 is configured to receive a symbol in a first time unit, where a first symbol is a 1^{st} symbol in the first time unit, and the first symbol includes a cyclic prefix CP, a tenth sequence, an eleventh sequence, a twelfth sequence, and a thirteenth sequence; a start position of the CP is a start position of the first symbol, a start position of the tenth sequence is adjacent to an end position of the CP, an end position of the eleventh sequence is adjacent to a start position of the twelfth sequence, an end position of the twelfth sequence is adjacent to a start position of the thirteenth sequence, and an end position of the thirteenth sequence is an end position of the first symbol; and the CP is the same as the eleventh sequence, and the tenth sequence is the same as the twelfth sequence.

When the communication apparatus 2200 is configured to implement the function of the first communication device,
the processing module 2201 is configured to generate a symbol in a first time unit, where a first symbol is a 1st symbol in the first time unit, the first symbol includes a cyclic prefix CP, a fourteenth sequence, a fifteenth sequence, a sixteenth sequence, and a seventeenth sequence, a start position of the CP is a start position of the first symbol, a start position of the fourteenth sequence is adjacent to an end position of the CP, an end position of the fifteenth sequence is adjacent to a start position of the sixteenth sequence, and the end position of the fifteenth sequence is determined based on a length of the first symbol; an end position of the seventeenth sequence is an end position of the first symbol; and the CP is the same as the fifteenth sequence, and the fourteenth sequence is the same as the sixteenth sequence; and
the transceiver module 2202 is configured to send the symbol in the first time unit.

When the communication apparatus 2200 is configured to implement the function of the second communication device,
the transceiver module 2202 is configured to receive a symbol in a first time unit, where a first symbol is a 1st symbol in the first time unit, the first symbol includes a cyclic prefix CP, a fourteenth sequence, a fifteenth sequence, a sixteenth sequence, and a seventeenth sequence, a start position of the CP is a start position of the first symbol, a start position of the fourteenth sequence is adjacent to an end position of the CP, an end position of the fifteenth sequence is adjacent to a start position of the sixteenth sequence, and the end position of the fifteenth sequence is determined based on a length of the first symbol; an end position of the seventeenth sequence is an end position of the first symbol; and the CP is the same as the fifteenth sequence, and the fourteenth sequence is the same as the sixteenth sequence.

All related content of the steps in the foregoing method embodiments may be cited in function descriptions of the corresponding functional modules. Details are not described herein again.

Optionally, in this application, that a transceiver module receives/sends information may alternatively be understood as that a processing module receives/sends the information via the transceiver module. That the processing module receives/sends the information via the transceiver module may alternatively be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 2200 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 2200 in FIG. 22 is a chip or a chip system, a function/implementation process of the transceiver module 2202 may be implemented by using an input/output interface (or a communication interface) of the chip or the chip system, and a function/implementation process of the processing module 2201 may be implemented by using a processor (or a processing circuit) of the chip or the chip system.

The communication apparatus 2200 provided in this embodiment may perform the foregoing methods. Therefore, for technical effect that can be achieved by the communication apparatus, refer to the foregoing method embodiments. Details are not described herein again.

In a possible product form, the first communication device or the second communication device in embodiments of this application may be further implemented through the following: one or more field programmable gate arrays (field programmable gate arrays, FPGAs), a programmable logic device (programmable logic device, PLD), a controller, a state machine, gate logic, a discrete hardware component, any other suitable circuitry, or any combination of circuits capable of performing various functions described throughout this application.

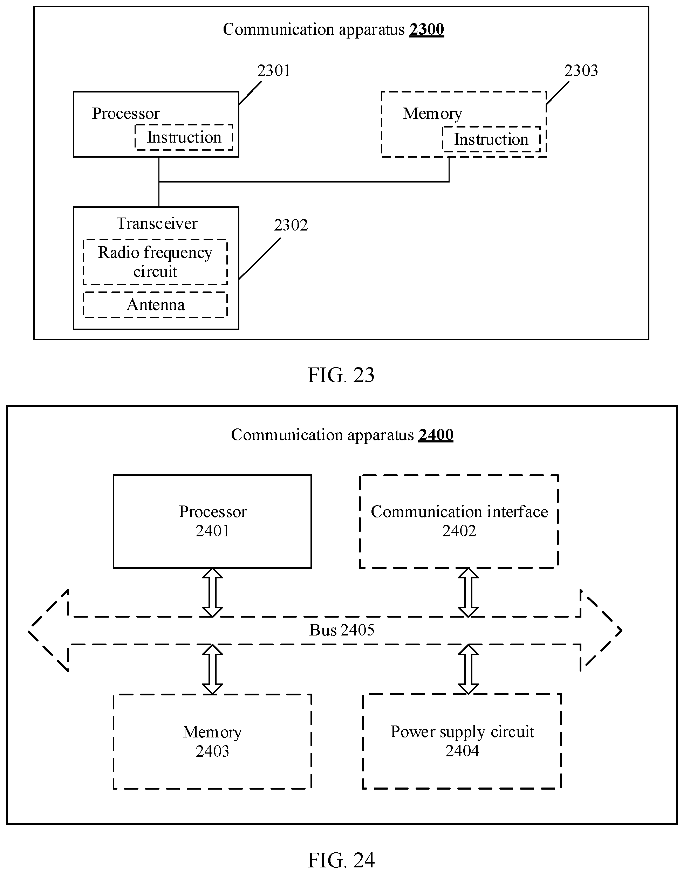

In another possible product form, the first communication device or the second communication device in embodiments of this application may be implemented by using a general bus architecture. For ease of description, FIG. 23 is a diagram of a structure of a communication apparatus 2300 according to an embodiment of this application. The communication apparatus 2300 includes a processor 2301 and a transceiver 2302. The communication apparatus 2300 may be the first communication device, or a chip or a chip system in the first communication device. Alternatively, the communication apparatus 2300 may be the second communication device, or a chip or a module in the second communication device. FIG. 23 shows only main components of the communication apparatus 2300. In addition to the processor 2301 and the transceiver 2302, the communication apparatus 2300 may further include a memory 2303 and an input/output apparatus (not shown in the figure).

Optionally, the processor 2301 is mainly configured to process a communication protocol and communication data, control the entire communication apparatus, execute a software program, and process data of the software program. The memory 2303 is mainly configured to store the software program and data. The transceiver 2302 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, like a touchscreen, a display, or a keyboard, is mainly configured to: receive data input by a user and output data to the user.

Optionally, the processor 2301, the transceiver 2302, and the memory 2303 may be connected through a communication bus.

It should be noted that the memory 2303 may exist independently of the processor 2301, or may be integrated with the processor 2301. The memory 2303 may be located inside the communication apparatus 2300, or may be located outside the communication apparatus 2300. This is not limited.

After the communication apparatus is powered on, the processor 2301 may read the software program in the memory 2303, interpret and execute instructions of the software program, and process data of the software program. When data needs to be sent wirelessly, the processor 2301 performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 2301. The processor 2301 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 2200 may be in a form of the communication apparatus 2300 shown in FIG. 23.

In an example, the function/implementation process of the processing module 2201 in FIG. 22 may be implemented by the processor 2301 in the communication apparatus 2300 shown in FIG. 23 by invoking the computer-executable instructions stored in the memory 2303. The function/implementation process of the transceiver module 2202 in FIG. 22 may be implemented by the transceiver 2302 in the communication apparatus 2300 shown in FIG. 23.

In another possible product form, the first communication device or the second communication device in this application may use a composition structure shown in FIG. 24, or include components shown in FIG. 24. FIG. 24 is a diagram of composition of a communication apparatus 2400 according to this application.

As shown in FIG. 24, the communication apparatus 2400 includes at least one processor 2401. Optionally, the communication apparatus further includes a communication interface 2402.

When related program instructions are executed in the at least one processor 2401, the apparatus 2400 is enabled to implement the method provided in any one of the foregoing embodiments and any possible design of the method. Alternatively, the processor 2401 is configured to implement, through a logic circuit or by executing code instructions, the method provided in any one of the foregoing embodiments and any possible design of the method.

The communication interface 2402 may be configured to: receive program instructions, and transmit the program instructions to the processor. Alternatively, the communication interface 2402 may be configured to perform communication interaction between the communication apparatus 2400 and another communication device, for example, exchange control signaling and/or service data. For example, the communication interface 2402 may be configured to: receive a signal from an apparatus other than the communication apparatus 2400, and transmit the signal to the processor 2401, or send a signal from the processor 2401 to a communication apparatus other than the communication apparatus 2400.

Optionally, the communication interface 2402 may be a code and/or data read/write interface circuit, or the communication interface 2402 may be a signal transmission interface circuit between a communication processor and a transceiver, or may be a pin of a chip.

Optionally, the communication apparatus 2400 may further include at least one memory 2403, and the memory 2403 may be configured to store the related program instructions and/or data that are/is required.

It should be noted that the memory 2403 may exist independently of the processor 2401, or may be integrated with the processor 2401. The memory 2403 may be located inside the communication apparatus 2400, or may be located outside the communication apparatus 2400. This is not limited.

Optionally, the communication apparatus 2400 may further include a power supply circuit 2404, and the power supply circuit 2404 may be configured to supply power to the processor 2401. The power supply circuit 2404 may be located in a same chip as the processor 2401, or may be located in a chip other than a chip in which the processor 2401 is located.

Optionally, the communication apparatus 2400 may further include a bus 2405, and parts of the communication apparatus 2400 may be interconnected through the bus 2405.

In some embodiments, in hardware implementation, a person skilled in the art may figure out that the communication apparatus 220 shown in FIG. 22 may be in a form of the communication apparatus 2400 shown in FIG. 24.

In an example, the function/implementation process of the processing module 2201 in FIG. 22 may be implemented by the processor 2401 in the communication apparatus 2400 shown in FIG. 24 by invoking the computer-executable instructions stored in the memory 2403. The function/implementation process of the transceiver module 2202 in FIG. 22 may be implemented by the communication interface 2402 in the communication apparatus 2400 shown in FIG. 24.

It should be noted that the structure shown in FIG. 24 does not constitute a specific limitation on the first communication device or the second communication device. For example, in some other embodiments of this application, the first communication device or the second communication device may include more or fewer components than those shown in the figure, a combination of some components, splitting of some components, or a different arrangement of the components. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include the memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

## Claims

1. A communication method, comprising:
generating a symbol in a first time unit, wherein a first symbol is a 1^{st} symbol in the first time unit, and the first symbol comprises a first sequence and a second sequence; in correspondence with that the first symbol does not comprise a cyclic prefix CP, a start position of the first sequence is a start position of the first symbol; in correspondence with that the first symbol comprises a CP, a start position of the first sequence is adjacent to an end position of the CP of the first symbol; and an end position of the second sequence is an end position of the first symbol; and
sending the symbol in the first time unit.

2. The method according to claim 1, wherein
the first time unit further comprises a second symbol, the second symbol is a symbol immediately following the first symbol, the second symbol comprises a third sequence and a fourth sequence, a start position of the third sequence is a start position of the second symbol, an end position of the fourth sequence is an end position of the second symbol, the third sequence is the same as the first sequence, a signal with a length of x at a tail of the fourth sequence is the same as a signal with a length of x at a tail of the second sequence, and x is a positive integer.

3. The method according to claim 2, wherein
the first sequence comprises a first unique word UW and/or service data, and the service data comprises at least a part of service data carried by the first symbol or at least a part of service data carried by the second symbol.

4. The method according to claim 1, wherein the first sequence is a second UW.

5. The method according to any one of claims 1 to 4, wherein the second sequence is a third UW.

6. The method according to any one of claims 1 to 5, wherein
the first symbol is a downlink symbol, and a length of the first sequence is determined based on a length of the CP of the first symbol and a maximum delay spread of the first symbol; or
the first symbol is an uplink symbol, and a length of the first sequence is determined based on a length of the CP of the first symbol, a maximum delay spread of the first symbol, and a maximum delay spread of a third symbol, wherein the third symbol is a symbol immediately preceding the first symbol.

7. The method according to claim 6, wherein
the length of the first sequence satisfies: ${x}_{h} + {N}_{1 s uw , μ} \leq {MDS}_{0} ,$ wherein *xₕ* represents the length of the first sequence, *N*_{1st uw,*µ*} represents the length of the CP of the first symbol, and *MDS*₀ represents the maximum delay spread of the first symbol.

8. The method according to claim 6, wherein
the length of the first sequence satisfies: ${x}_{h} + {N}_{1 s uw , μ} \leq max \left({MDS}_{0}, {MDS}_{pre}\right) ,$wherein *xₕ* represents the length of the first sequence, *N*_{1st uw,*µ*} represents the length of the CP of the first symbol, *MDS*₀ represents the maximum delay spread of the first symbol, *MDSₚᵣₑ* represents the maximum delay spread of the third symbol, and *max* ( ) represents a maximum value operator.

9. The method according to any one of claims 6 to 8, wherein
the length of the first sequence is further determined based on at least one of the following: a modulation and coding scheme MCS of the first symbol, an error vector magnitude EVM required for the first symbol, a symbol type of the first symbol, or a transmission payload of the transmitted symbol.

10. The method according to any one of claims 1 to 9, wherein
the method further comprises: sending first information; or
the method further comprises: receiving first information, wherein
the first information comprises a configuration parameter of the first sequence.

11. The method according to claim 10, wherein
when the first sequence comprises the first UW and the service data, the configuration parameter of the first sequence comprises a length parameter of the first UW.

12. The method according to claim 10 or 11, wherein
the first information is carried in one of the following: downlink control information DCI, a media access control-control element MAC-CE, or a radio resource control RRC message.

13. The method according to any one of claims 10 to 12, wherein
the first information further comprises position information of a fast Fourier transform FFT window, and the FFT window is used for demodulation of the first symbol.

14. A communication method, comprising:
generating a symbol in a first time unit, wherein a first symbol is a 1^{st} symbol in the first time unit, and the first symbol comprises a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit comprises a seventh sequence, and an end position of the seventh sequence is adjacent to the start position of the CP; and the fifth sequence is the same as the seventh sequence, and the sixth sequence is the same as the CP; and
sending the symbol in the first time unit.

15. The method according to claim 14, wherein
the first time unit further comprises a second symbol, the second symbol is a symbol immediately following the first symbol, the second symbol comprises an eighth sequence, and an end position of the eighth sequence is an end position of the second symbol; a signal with a length of x at a tail of the eighth sequence is the same as a signal with a length of x at a tail of a ninth sequence, wherein x is a positive integer; and the ninth sequence comprises the fifth sequence and the sixth sequence, and an end position of the ninth sequence is the end position of the sixth sequence.

16. The method according to claim 14 or 15, wherein
a precoding scheme of the first symbol is the same as a precoding scheme of the last symbol; or
the first symbol and the last symbol are not precoded.

17. A communication method, comprising:
receiving a symbol in a first time unit, wherein a first symbol is a 1^{st} symbol in the first time unit, and the first symbol comprises a first sequence and a second sequence; in correspondence with that the first symbol does not comprise a cyclic prefix CP, a start position of the first sequence is a start position of the first symbol; in correspondence with that the first symbol comprises a CP, a start position of the first sequence is adjacent to an end position of the CP of the first symbol; and an end position of the second sequence is an end position of the first symbol.

18. A communication method, comprising:
receiving a symbol in a first time unit, wherein a first symbol is a 1^{st} symbol in the first time unit, and the first symbol comprises a cyclic prefix CP, a fifth sequence, and a sixth sequence; a start position of the CP is a start position of the first symbol, an end position of the fifth sequence is adjacent to a start position of the sixth sequence, and an end position of the sixth sequence is an end position of the first symbol; a second time unit is a time unit immediately preceding the first time unit, a last symbol in the second time unit comprises a seventh sequence, and an end position of the seventh sequence is adjacent to the start position of the CP; and the fifth sequence is the same as the seventh sequence, and the sixth sequence is the same as the CP.

19. A communication apparatus, wherein the communication apparatus comprises a transceiver module and a processing module;
the transceiver module is configured to perform a receiving behavior or a sending behavior in the method according to any one of claims 1 to 13, or perform a receiving behavior or a sending behavior in the method according to any one of claims 14 to 16, or perform a receiving behavior or a sending behavior in the method according to claim 17, or perform a receiving behavior or a sending behavior in the method according to claim 18; and
the processing module is configured to perform a processing behavior in the method according to any one of claims 1 to 13, or perform a processing behavior in the method according to any one of claims 14 to 16, or perform a processing behavior in the method according to claim 17, or perform a processing behavior in the method according to claim 18.

20. A communication apparatus, wherein the communication apparatus comprises a processor; and the processor is configured to run a computer program or instructions, to enable the communication apparatus to perform the method according to any one of claims 1 to 13, or to enable the communication apparatus to perform the method according to any one of claims 14 to 16, or to enable the communication apparatus to perform the method according to claim 17, or to enable the communication apparatus to perform the method according to claim 18.

21. A computer-readable storage medium, wherein the computer-readable storage medium stores computer instructions or a program, and when the computer instructions or the program is run on a computer, the method according to any one of claims 1 to 13 is enabled to be performed, or the method according to any one of claims 14 to 16 is enabled to be performed, or the method according to claim 17 is enabled to be performed, or the method according to claim 18 is enabled to be performed.

22. A computer program product, wherein when the computer program product runs on a communication apparatus, the communication apparatus is enabled to perform the method according to any one of claims 1 to 13, or the communication apparatus is enabled to perform the method according to any one of claims 14 to 16, or the communication apparatus is enabled perform the method according to claim 17, or the communication apparatus is enabled to perform the method according to claim 18.

23. A chip, comprising a processor, wherein the processor is coupled to a memory, the memory is configured to store a program or instructions, and when the program or the instructions are executed by the processor, the chip is enabled to perform the method according to any one of claims 1 to 13, or the chip is enabled to perform the method according to any one of claims 14 to 16, or the chip is enabled to perform the method according to claim 17, or the chip is enabled to perform the method according to claim 18.
